# FASCICULE DE BREVET EUROPEEN

(11) **EP 3 729 395 B1**
(45) Date de publication et mention de la délivrance du brevet: **26.01.2022**
(21) Numéro de dépôt: 18825762.0
(22) Date de dépôt: 06.12.2018
(51) Int. Cl.: G08C 17/02, H04L 12/28

(54) **STATION DE PROGRAMMATION UNIVERSELLE À BLOCS ORIENTABLES**
UNIVERSELLE PROGRAMMIERSTATION MIT AUSRICHTBAREN BLÖCKEN
UNIVERSAL PROGRAMMING STATION WITH ORIENTABLE BLOCKS

(30) Priorité: 18.12.2017 FR 1762340
(43) Date de publication de la demande: 28.10.2020
(73) Titulaire: ORANGE, 92130 Issy-les-Moulineaux (FR)
(72) Inventeur: GAILLET, Thierry, 92326 Châtillon Cedex (FR); LEROUX, Sylvain, 92326 Châtillon Cedex (FR)
(74) Mandataire: Plasseraud IP
(86) Numéro de dépôt international: PCT/FR2018/053126
(87) Numéro de publication internationale: WO 2019/122570

(56) Documents cités:
- US-A1- 2009 066 534
- US-A1- 2010 121 968

## Description

La présente invention concerne une station de programmation universelle. Voir par exemple le document US2010/121968.

Les particuliers et les entreprises ont des besoins croissants de contrôle d'équipements qui sont installés dans des locaux variés, tels que des locaux d'habitation ou des locaux d'activité. Ces équipements sont par exemple des volets roulants, des robots domestiques, des systèmes d'éclairage, des systèmes de chauffage, des systèmes de surveillance ou de sécurité, etc. Ils peuvent appartenir au secteur domotique ou au secteur d'activité économique du local. Généralement, de tels équipements peuvent être contrôlés par des télécommandes séparées qui sont dédiées à chacun d'eux, ou par des applications qui sont accessibles sur téléphones intelligents, appelés «smartphones» en anglais, ou sur des tablettes.

Mais de nos jours, d'autres tâches à effectuer peuvent concerner les activités d'un particulier ou d'un membre d'entreprise sur des réseaux sociaux, ou des actions à effectuer par lui en réponse à de nouveaux contenus qui apparaissent sur des sites accessibles par internet. Ces tâches nécessitent que l'utilisateur se connecte au réseau social ou au site concerné pour y accomplir les actions désirées, telles qu'envoyer une réponse, surveiller l'apparition de notifications, d'interventions, de publications, etc.

Or l'ensemble des contrôles d'équipements qui sont nécessaires et/ou des tâches à effectuer sur les réseaux sociaux en réponse à des contenus d'internet, constitue une charge conséquente qui est consommatrice de temps. Pour réduire cette charge, de nombreux équipements peuvent être programmés par un utilisateur, afin que chaque équipement soit activé ultérieurement sans son intervention, d'une façon automatique. Mais les modes de programmation qui sont mis en œ uvre varient d'un équipement à l'autre, si bien que la programmation elle-même d'un équipement nécessite que l'utilisateur consulte une notice qui est spécifique à cet équipement. En outre, la programmation de chaque équipement doit être effectuée en utilisant une interface qui est spécifique à cet équipement, soit sur l'équipement lui-même, soit par l'intermédiaire d'une télécommande dédiée à l'équipement, soit par l'intermédiaire d'un site du fournisseur ou du fabricant de l'équipement, qui est accessible par internet. Cette multiplicité des interfaces de programmation constitue une difficulté supplémentaire pour l'utilisateur, en plus de celle des logiques et des langages de programmation qui varient d'un équipement à un autre.

Par ailleurs, les modes de programmation de type «condition puis action», popularisé par le site IFTTT.com (IFTTT pour «If This Then That» en anglais), permettent de créer des petits programmes formés d'instructions qui relient chacune une condition à une action à exécuter. Bien que ce mode de programmation constitue une simplification par rapport à d'autres qui sont utilisés depuis plus longtemps, une telle programmation peut apparaître abstraite pour un utilisateur qui n'est pas accoutumé à l'informatique ni à la mise en œuvre d'automates.

A partir de cette situation, il existe donc un besoin pour qu'un utilisateur puisse programmer facilement et rapidement une multiplicité d'équipements ou appareils.

En outre, le besoin concerne une interface de programmation commune qui soit compatible avec des équipements ou appareils multiples.

Pour répondre à ce besoin ou un autre, selon un premier aspect, une station de programmation universelle à blocs orientables, destinée à programmer des fonctionnements d'au moins un appareil, est proposée. Dans cette station, des orientations respectives de plusieurs blocs sur un support de la station correspondent, par configuration desdits plusieurs blocs et du support, à au moins une instruction de programmation d'un fonctionnement de l'appareil, et la station est pourvue d'un module de détection configuré pour détecter les orientations respectives des blocs portés par le support, et d'un module de communication configuré pour envoyer à une plateforme de gestion, par l'intermédiaire d'un réseau de communication, des données qui représentent l'au moins une instruction de programmation correspondant aux blocs et à leurs orientations respectives sur le support.

Ainsi, la station proposée, comprenant un support et des blocs, constitue un outil de programmation qui est visuel, simple et rapide à utiliser, en permettant de programmer un appareil par des actions manuelles, qui consistent à manipuler pour orienter des blocs par rapport à un support. Un tel outil de programmation met donc la programmation du fonctionnement d'un appareil, ou la modification d'une programmation existante, à la portée de tout utilisateur même s'il est inexpérimenté en informatique ou en matière d'automates.

Par ailleurs, la station proposée peut être utilisée pour programmer un ou plusieurs appareils, sans que le modèle de cette station nécessite d'être adapté à chaque appareil. En ce sens, la station de programmation proposée est dite universelle. Cette universalité peut notamment être favorisée si la station est configurée pour ne retourner à la plateforme de gestion que des données qui concernent les positions et les orientations des blocs sur le support, sans données qui concernent des instructions de programmation affectées aux orientations des blocs. La transcription des orientations des blocs en une ou plusieurs instructions de programmation peut alors être réalisée et mémorisée dans la plateforme de gestion.

D'une façon générale, le module de communication de la station peut être configuré, dans un ou plusieurs modes de réalisation, pour effectuer des communications de données avec la plateforme de gestion, par des liaisons de communication qui comportent un segment sans-fil à partir de la station. Notamment, la station peut communiquer par l'intermédiaire d'une passerelle de service, communément appelée «box», avec une technologie de communication de données, par exemple sans-fil telle que la technologie WiFi^{®}, la technologie Bluetooth^{®} (BT) ou l'une de ses variantes.

Dans des modes préférés de réalisation, la station peut en outre être configurée pour, suite à un repositionnement sur le support d'au moins un bloc dont l'orientation a été modifiée par un utilisateur, identifier l'orientation modifiée de l'au moins un bloc, telle que résultant du repositionnement, et envoyer à la plateforme de gestion de nouvelles données qui représentent au moins une nouvelle instruction de programmation résultant de ladite orientation modifiée de l'au moins un bloc. Un tel mode de reprogrammation de la station, par repositionnement d'un ou plusieurs blocs, est encore plus manuel et facile à accomplir pour un utilisateur qui est inexpérimenté en informatique ou en matière d'automates.

Dans d'autres modes préférés de réalisation, ou en combinaison avec les précédents, au moins un des blocs peut être détachable et repositionnable sur le support selon plusieurs orientations distinctes, pour exposer des faces respectives de plusieurs des blocs en juxtaposition sur le support, afin de composer une combinaison des faces exposées desdits plusieurs blocs qui correspond à l'instruction de programmation. Une telle possibilité de détacher les blocs du support pour modifier leur orientation ou position sur le support procure une facilité de manipulation de la station qui est accrue. En particulier, les actions de programmation puis de reprogrammation de la station sont plus naturelles pour l'utilisateur, sans des contraintes qui soient dues à la présence d'un rattachement permanent de chaque bloc au support.

Encore dans des modes préférés de réalisation, au moins un des blocs peut posséder plusieurs faces qui sont munies d'afficheurs respectifs. Ainsi, des inscriptions qui sont présentes sur ces faces peuvent être modifiées sans que le bloc concerné soit échangé avec un autre qui serait pourvu d'inscriptions différentes. Le caractère d'universalité de la station de programmation peut donc être encore accru de cette façon.

Pour de tels modes de réalisation à afficheurs, le module de communication peut en outre être configuré pour recevoir, en provenance de la plateforme de gestion par l'intermédiaire du réseau de communication, des instructions de programmation qui sont disponibles ou des éléments d'instructions de programmation qui sont disponibles à afficher sur ces faces à afficheurs.

Aussi pour des modes de réalisation à afficheurs, et dans le cas où le module de communication est configuré pour recevoir des éléments d'instructions de programmation disponibles à afficher sur les faces munies d'afficheurs, certains au moins de ces éléments d'instructions de programmation peuvent spécifier chacun une partie au moins d'une condition d'activation, ou spécifier chacun au moins en partie un fonctionnement d'un appareil. Alors, des instructions de programmation qui sont accessibles par l'utilisateur au moyen de la station peuvent être constituées chacune par une condition d'activation qui est combinée avec un fonctionnement d'un appareil. La station proposée peut ainsi permettre de construire des instructions de programmation, chacune par assemblage d'une condition d'activation avec un fonctionnement d'appareil. Un grand nombre de combinaisons, et donc d'instructions différentes, sont ainsi accessibles par la station de programmation, et chaque instruction de programmation peut être construite en sélectionnant successivement chacun des éléments d'instruction de programmation qui la constituent.

Pour augmenter encore le nombre d'instructions différentes qui sont accessibles par la station de programmation, certains des éléments d'instructions de programmation qui spécifient une partie d'une condition d'activation, peuvent spécifier chacun une variable de condition ou une condition qui est destinée à porter sur une variable de condition. De même, certains des éléments d'instructions de programmation qui spécifient en partie un fonctionnement d'appareil, peuvent spécifier chacun un appareil à activer ou un fonctionnement d'appareil à activer si la condition d'activation est réalisée. Ainsi, une instruction de programmation peut résulter de l'association particulière de quatre éléments d'instructions de programmation, d'où un nombre de combinaisons différentes, toutes accessibles par la station de programmation, qui est supérieur.

Encore pour des modes de réalisation à afficheurs, la station de programmation universelle peut être configurée en outre pour, sur détection qu'un bloc est retiré du support, afficher sur des faces du bloc retiré des éléments d'instructions de programmation qui ont été sélectionnés en fonction d'au moins un autre élément d'instruction de programmation qui est déterminé par une face exposée d'un autre bloc resté sur le support. Ainsi, des éléments d'instructions de programmation qui sont affichés sur le bloc retiré peuvent constituer une offre contextuelle d'éléments d'instructions de programmation, c'est-à-dire une pré-sélection d'éléments d'instructions de programmation qui sont compatibles ou cohérents avec au moins un autre élément d'instruction de programmation qui est affiché sur une face exposée d'un bloc voisin du bloc retiré. La programmation ou reprogrammation de la station par l'utilisateur est alors encore plus facilitée de cette façon. Une telle pré-sélection contextuelle d'éléments d'instructions de programmation, pour les afficher sur les faces du bloc retiré, peut être accomplie par la plateforme de gestion, puis chaque élément d'instruction de programmation ainsi pré-sélectionné peut être transmis à la station pour être affiché sur le bloc retiré.

Dans un ou plusieurs modes de réalisation, la station peut aussi être configurée pour que l'un au moins des blocs affiche sur au moins une face de ce bloc, un réglage ou une valeur d'un paramètre qui est applicable à la station, et ce réglage ou cette valeur de paramètre est appliqué(e) à la station si la face du bloc sur laquelle il (elle) est affiché(e) est exposée sur le support. Ainsi, la station permet de configurer des paramètres de son propre fonctionnement.

Encore pour des modes de réalisation à afficheurs, certains au moins des blocs peuvent avoir chacun plusieurs faces qui sont exposées simultanément lorsqu'ils sont positionnés sur le support, les faces d'un même bloc qui sont exposées simultanément participant alors à des instructions de programmation ou des éléments d'instructions de programmation. Dans ce cas, la station peut être configurée en outre pour que, lorsqu'un bloc à plusieurs faces exposées simultanément est retiré du support puis repositionné sur le support afin de sélectionner une instruction de programmation par l'une des faces exposées de ce bloc, un élément d'instruction de programmation qui était affiché sur une autre des faces exposées du même bloc avant retrait, est affiché à nouveau après que le bloc a été repositionné sur le support. Autrement dit, les faces d'un bloc à plusieurs faces qui sont exposées simultanément sur le support ont au moins deux fonctions : la première fonction d'afficher les éléments d'instructions de programmation qui ont été sélectionnés antérieurement et qui sont appliqués actuellement, lorsque le bloc est positionné sur le support, et aussi la seconde fonction de présenter des éléments d'instructions de programmation qui sont disponibles, lorsque le bloc est retiré du support. Un retour à la première fonction peut alors être déclenché automatiquement lorsque le bloc est repositionné sur le support.

Dans divers modes de réalisation, chaque bloc peut être de forme substantiellement cubique, ou être un parallélépipède rectangle. Dans ce cas, le support peut être configuré pour maintenir huit blocs en juxtaposition tridimensionnelle de 2 blocs x 2 blocs x 2 blocs, selon trois directions de juxtaposition qui sont perpendiculaires aux faces des blocs. La station est alors facile et agréable à manipuler par l'utilisateur.

Par ailleurs, dans d'autres modes préférés de réalisation, le support peut être conçu pour correspondre à une répartition spatiale d'au moins un appareil dans une zone géographique, et être configuré pour maintenir chaque bloc qui concerne la programmation de cet appareil à un emplacement sur le support qui correspond à un emplacement de l'appareil dans la zone géographique

Selon un second aspect, un procédé de programmation de fonctionnements d'au moins un appareil est proposé, qui comprend :
/1/ fournir une station de programmation universelle qui est conforme au premier aspect, et la relier à une plateforme de gestion de cette station par un réseau de communication ;
/2/ par la plateforme de gestion : configurer les blocs et le support de la station, en affectant des instructions de programmation ou des éléments d'instructions de programmation aux orientations des blocs sur le support ;
/3/ par la station : détecter des orientations actuelles des blocs portés par le support, puis envoyer à la plateforme de gestion par le réseau de communication, des données qui identifient ces orientations actuelles des blocs ;
/4/ par un utilisateur : modifier une orientation d'au moins un des blocs sur le support, pour constituer une nouvelle orientation actuelle de ce bloc ;
/5/ par la station : répéter l'étape /3/ pour la nouvelle orientation actuelle de chaque bloc dont l'orientation a été modifiée ;
/6/ par la plateforme de gestion : déterminer au moins une instruction de programmation qui correspond aux orientations actuelles des blocs sur le support, telles qu'identifiées par les données reçues, puis en collaboration avec une autre plateforme relative à l'appareil, commander un fonctionnement de l'appareil qui est conforme à l'instruction de programmation déterminée.

Les instructions de programmation ou éléments d'instructions de programmation qui sont utilisé(e)s pour configurer les blocs peuvent être reçu(e)s par la plateforme de gestion en provenance de l'autre plateforme relative à l'appareil. Il est ainsi possible de prendre en compte des spécificités de chaque appareil à programmer, notamment en fonction de son fabricant et des options dont il peut être pourvu.

Lorsque des faces de blocs sont munies d'afficheurs, le procédé peut comprendre en outre :
- par la plateforme de gestion : transmettre à la station, par le réseau de communication, les instructions de programmation ou éléments d'instructions de programmation affecté(e)s à celles des faces de blocs munies d'afficheurs qui sont exposées sur le support ;
- par la station : pour les blocs portés par le support, afficher sur les faces exposées et munies d'afficheurs de ces blocs, les instructions de programmation ou éléments d'instructions de programmation qui sont affecté(e)s à ces faces.

Lorsqu'un des blocs est retiré du support, le procédé peut comprendre en outre :
- par la station : afficher sur plusieurs des faces munies d'afficheurs du bloc retiré, des instructions de programmation ou éléments d'instructions de programmation qui sont disponibles pour être sélectionné(e)s alternativement par l'utilisateur en modifiant l'orientation du bloc pour le repositionner sur le support.

Enfin, de façon générale, chaque appareil dont des fonctionnements sont programmables au moyen de la station proposée en utilisant le procédé proposé, peut être un équipement de domotique qui est installé dans un local d'habitation auquel la station est dédiée.

D'autres particularités et avantages de la présente invention apparaîtront dans la description ci-après d'exemples de réalisation non limitatifs, en référence aux dessins annexés, dans lesquels :
- la figure 1 est un diagramme synoptique des éléments nécessaires pour mettre en œuvre une station de programmation universelle à blocs orientables selon un ou plusieurs modes de réalisation ;
- la figure 2a montre un mode de réalisation particulier pour une station de programmation universelle à blocs orientables ;
- la figure 2b montre un mode de réalisation particulier d'un support d'une station de programmation universelle à blocs orientables selon un ou plusieurs modes de réalisation ;
- la figure 3a montre la station de la figure 2a lorsqu'un des blocs est retiré dans un ou plusieurs modes de réalisation ;
- les figures 3b à 3d montrent la station de la figure 3a lorsqu'un des blocs est retiré puis repositionné pour modifier un élément d'instruction de programmation dans un ou plusieurs modes de réalisation ;
- les figures 3e à 3g montrent la station de la figure 3d lorsqu'un des blocs est retiré puis repositionné pour modifier un élément d'instruction de programmation dans un ou plusieurs modes de réalisation ;
- la figure 4 correspond à la figure 2a pour un autre mode de réalisation ; et
- les figures 5 et 6 correspondent aux figures 2a et 3a pour des configurations alternatives de stations de programmation universelles à blocs orientables, selon un ou plusieurs modes de réalisation.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

En outre, l'Homme du métier peut se rendre compte que les enseignements des présentes peuvent être mis en œuvre sous différentes formes selon différents modes de réalisation, et que les structures et/ou fonctions décrites ci-dessous ne représentent que certains modes de réalisation particuliers. En particulier, l'Homme du métier comprendra qu'un aspect des systèmes, stations de programmation, plateformes, équipements utilisateur et procédés décrit dans les présentes peut être mis en œuvre indépendamment d'autres aspects, et que différents aspects peuvent être combinés de différentes manières.

La présente description fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en œuvre sous forme matérielle, logicielle (y compris sous forme de logiciel embarqué («firmware»), ou de «middleware»), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans les présentes pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «serveur» ou «plateforme», on entend dans les présentes tout point de service (virtualisé ou non) ou dispositif opérant des traitements de données, une ou plusieurs bases de données, et/ou des fonctions de communication de données. Par exemple, et de manière non limitative, le terme «serveur» ou le terme «plateforme» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service (parfois appelées «box» ou «passerelle résidentielle»), des décodeurs multimédia (parfois appelés «set-top boxes»), des équipements intégrés combinant diverses fonctionnalités, telles que deux ou plus des fonctionnalités mentionnées ci-dessus. Les serveurs peuvent fortement varier dans leur configuration ou leurs capacités, mais un serveur inclura généralement une ou plusieurs unité(s) centrale(s) de traitement et une mémoire. Un serveur peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Les termes «réseau» et «réseau de communication» tels qu'utilisés dans les présentes font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans les présentes font référence à des couplages, connexions, montages, qui peuvent être directs ou indirects, et comprennent notamment des connexions entre équipements électroniques ou entre des portions de tels équipements qui permettent des opérations et fonctionnements tels que décrits dans les présentes. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes «application» ou «programme applicatif» (AP) et leurs variantes («app», «webapp», etc.) tels qu'utilisés dans les présentes correspondent à tout outil qui fonctionne et est opéré au moyen d'un ordinateur, pour fournir ou exécuter une ou plusieurs fonction(s) ou tâche(s) pour un utilisateur ou un autre programme applicatif. Pour interagir avec un programme applicatif, et le contrôler, une interface utilisateur peut être fournie sur l'équipement sur lequel le programme applicatif est mis en œuvre. Par exemple, une interface graphique (en anglais, «graphical user interface» ou GUI) peut être générée et affichée sur un écran de l'équipement utilisateur, ou une interface utilisateur audio peut être restituée à l'utilisateur en utilisant un haut-parleur, un casque ou une sortie audio.

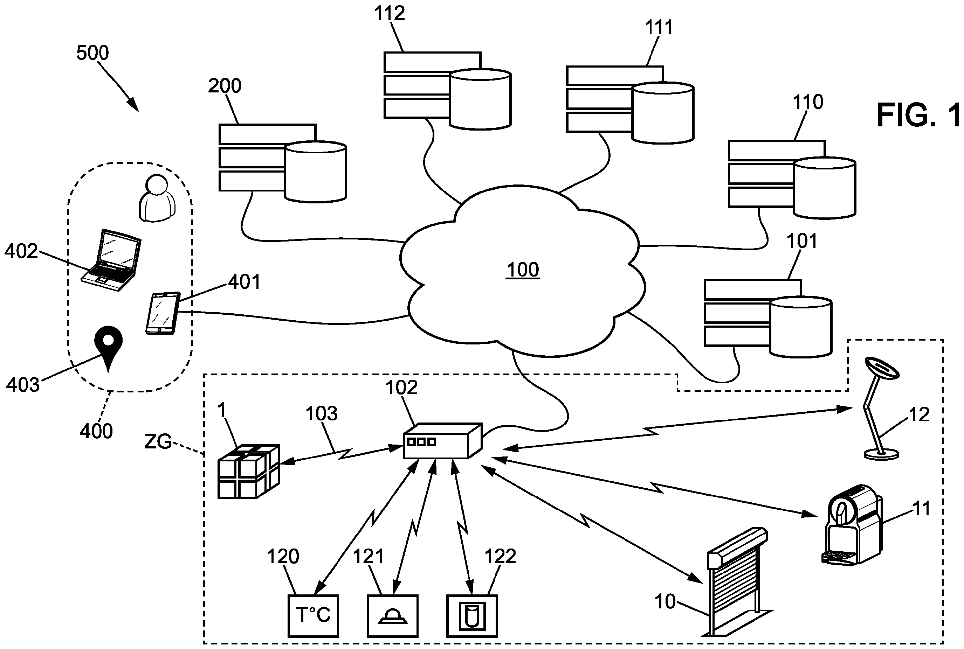

La figure 1 est un diagramme illustrant un mode de réalisation dans lequel un système 500 comprend une station de programmation universelle à blocs orientables, telle que proposée dans les présentes et désignée globalement par la référence 1, configurée pour communiquer avec une plateforme de gestion 101 par le biais d'un réseau ou plusieurs réseau(x) comprenant un réseau de communication 100, auquel une passerelle de service 102, couramment appelée «box», est connectée. La station de programmation 1 sera de préférence configurée pour que la liaison de communication 103 avec la passerelle de service 102 soit de type sans-fil, par exemple en utilisant la technologie de communication de données WiFi^{®}, ou la technologie Zigbee^{®}, ou encore une technologie de communication sans-fil de type Bluetooth^{®} (et notamment la technologie Bluetooth Low Energy^{®}, ou BLE), ou Z-Wave^{®} et un protocole de communication de type IEEE 802.15.4. L'utilisation d'une connexion sans-fil sur le segment de communication qui aboutit à la station 1 permet en effet à un utilisateur de manipuler la station 1 sans entrave.

En fonction du mode de réalisation, la station de programmation 1 et la plateforme de gestion 101 peuvent être interconnectées et échanger des données sur une ou plusieurs liaison(s) de communication, en utilisant un ou plusieurs réseaux de différents types, tels qu'un réseau fixe, un réseau cellulaire (par exemple selon la norme 2G (GSM, GPRS, EDGE), 3G (UMTS), 4G (LTE), LTE-A, LTE-M, CDMA, CDMA2000, HSPA, 5G, ou leurs variantes ou évolutions), un autre type de réseau radio (par ex. WiFi^{®} ou Bluetooth^{®}), un réseau IP, une combinaison de plusieurs de ces réseaux, etc. Pour cela, la station de programmation 1 et la plateforme de gestion 101 seront configurées avec des moyens de communication de données adaptés.

Un espace de ressources (traitement, mémoire, etc.) est ainsi affecté à la station 1 dans la plateforme de gestion 101. Dans le mode de réalisation illustré par la figure 1, la plateforme de gestion 101 est connectée au réseau 100, de façon à ce que des données puissent être transmises entre la plateforme 101 et la station 1. Dans un ou plusieurs modes de réalisation, la plateforme de gestion 101 peut être hébergée par un ou plusieurs serveurs, par exemple au sein d'un cloud. Ce ou ces serveurs, qui peuvent être tout type d'équipement ou de système comprenant des moyens de traitement de données, tels qu'un ordinateur, un ensemble d'ordinateurs interconnectés (dans le cadre d'un réseau virtualisé par exemple), et comprendre et/ou être connectés à une ou plusieurs bases de données pour stocker des données, peuvent être configurés pour échanger des données avec une ou plusieurs stations de programmation 1, et notamment recevoir d'une ou de plusieurs stations de programmation des données représentant au moins une instruction de programmation du fonctionnement d'au moins un appareil.

Dans un ou plusieurs modes de réalisation, la plateforme de gestion 101 peut être munie d'une interface de programmation applicative (en anglais, «Application Programming Interface», ou «API»), ou de tout autre type d'interface (non représentée sur la figure 1), configurée pour transmettre vers et recevoir des données depuis une ou plusieurs stations de programmation, et notamment recevoir des données représentant au moins une instruction de programmation du fonctionnement d'au moins un appareil.

Dans un ou plusieurs modes de réalisation, le système 500 comprend un ou plusieurs appareils (ou objets), par exemple des appareils de domotique tels qu'un volet roulant 10, une cafetière 11 et un système d'éclairage 12, qui sont cités à titre d'exemples (illustrés sur la figure 1) sans limitation quant à leur nature et leur nombre, qui sont respectivement connectés à des plateformes dédiées de gestion d'objets connectés 110, 111, 112, par exemple au travers du réseau de communication 100, comme illustré sur la figure 1. La connexion de chacun des appareils ou objets connectés au réseau 100 peut aussi être réalisée par l'intermédiaire de la passerelle 102, mais pas nécessairement. Possiblement, une fonction logicielle qui est destinée à être exécutée par un terminal qui est connecté au réseau 100, peut avoir la fonction d'un appareil au sens des présentes, c'est-à-dire qu'elle peut être programmée à l'aide de la station 1. Une telle fonction logicielle peut être, notamment, de poster une déclaration sur un réseau social ou d'envoyer un courrier électronique. Les appareils qui sont destinés à être programmés au moyen de la station 1, comprenant les appareils 10-12 à titre d'illustration, peuvent être situés dans ou à proximité d'une zone géographique limitée, notée ZG. Par exemple, une telle zone ZG peut être un local d'habitation.

Dans un ou plusieurs modes de réalisation, chaque plateforme dédiée, peut aussi être hébergée par un ou plusieurs serveurs, par exemple dans un cloud. Dans le mode de réalisation illustré par la figure 1, un espace de ressources (traitement, mémoire, etc.) est affecté dans la plateforme 110 au volet roulant 10, un espace dans la plateforme 111 est affecté à la cafetière 11, et un espace dans la plateforme 112 est affecté au système d'éclairage 12. Les plateformes 110-112 de gestion d'objets connectés peuvent être gérées par les fournisseurs respectifs des appareils 10, 11, 12, mais pas nécessairement. Chacune des plateformes 110-112 possède des données de fonctionnement de l'appareil correspondant, et peut communiquer avec lui par l'intermédiaire du réseau 100, notamment en utilisant des interfaces de programmation applicatives, ou APIs. En particulier, chacune des plateformes 110-112 peut être munie d'une API et de moyens de communication de données configurés pour communiquer avec l'appareil supervisé pour déclencher à distance un fonctionnement de l'appareil correspondant, pour communiquer à une autre plateforme des informations relatives à cet appareil, et pour communiquer des données avec la plateforme de gestion 101.

Le système 500 comprend en outre des objets connectés générant des données, tels que des capteurs, comme par exemple le capteur de température 120, le capteur de luminosité 121, et le capteur de présence 122 illustrés sur la Figure 1, qui sont cités à titre d'exemples sans limitation quant à leur nature et leur nombre. Dans un ou plusieurs modes de réalisation, ces capteurs sont configurés pour transmettre des données à la plateforme de gestion 101, par exemple par le biais du réseau de communication 100, avec possiblement encore des espaces de ressources dédiés dans des plateformes (non-représentées). Le mode de connexion de chacun des capteurs au réseau de communication 100 peut varier en fonction du mode de réalisation et du capteur. Par exemple, les capteurs de température 120, de luminosité 121 et de présence 122 peuvent être reliés au réseau 100 par un réseau sans fil de type WPAN (de l'anglais «Wireless Personal Area Network») en utilisant une technologie de communication sans-fil de type Bluetooth^{®} (et notamment la technologie Blutooth Low Energy^{®}, ou BLE), Zigbee^{®}, ou Z-Wave^{®} et un protocole de communication de type IEEE 802.15.4. Une fonction de surveillance de contenus qui sont susceptibles d'être gérés et/ou générés par un service en ligne, d'apparaître sur un réseau social ou sur le réseau Internet, et qui est exécutée par un terminal connecté au réseau de communication 100, peut aussi constituer un capteur au sens des présentes.

Le système 500 de la figure 1 comprend un ensemble 400 d'équipements ou de fonctions utilisateur 401, 402, 403, configurés pour fournir une interface utilisateur de gestion (comprenant notamment la configuration, le pilotage, l'utilisation, et la commande) de la station de programmation 1. Les utilisateurs, via leurs services en ligne (par exemple via leur réseau social), via leur(s) équipement(s) utilisateur, via des applications sur leur(s) smartphone(s) ou des Webapps (applications exécutables à partir d'un navigateur) sur leur(s) ordinateur(s), et/ou leur(s) service(s) de messagerie, peuvent ainsi interagir avec la station 1.

Dans un ou plusieurs modes de réalisation, l'équipement utilisateur 401, 402 est configuré pour communiquer par réseau sans-fil, par exemple de type WiFi^{®}, avec la passerelle de service 102, pour échanger des données avec la plateforme de gestion 101. En fonction du mode de réalisation, une application configurée pour la gestion (comprenant notamment la configuration, le pilotage, l'utilisation, et la commande) d'une ou plusieurs station(s) de programmation 1, encore appelée application compagnon, pourra être exécutée par l'équipement utilisateur 401, 402. L'application compagnon pourra comprendre une interface utilisateur pour les commandes utilisateur de la (ou des) station(s) de programmation. L'équipement utilisateur 401, 402 est alors adapté pour la mise en œuvre de l'application compagnon, et comprend typiquement un écran, par exemple tactile, pour l'affichage d'une interface utilisateur graphique (GUI, pour «*Graphical User Interface»)* de l'application compagnon, un microphone pour l'enregistrement de commandes vocales et d'autres interfaces d'entrée configurées en fonction du mode de réalisation de l'application compagnon pour l'entrée de commandes utilisateur de l'application.

Dans un ou plusieurs modes de réalisation, l'équipement utilisateur 401, 402 comprend une mémoire, une unité de traitement, équipée par exemple d'un processeur P, et pilotée par une application, notamment l'application compagnon dédiée à la commande et/ou la configuration d'une ou plusieurs station(s) de programmation, ou un programme d'ordinateur, configuré(e)(s) pour la mise en œuvre d'un ou plusieurs mode(s) de réalisation des procédés de programmation proposés.

A l'initialisation, les instructions de code du programme d'ordinateur sont par exemple chargées dans une mémoire RAM avant d'être exécutées par le processeur de l'unité de traitement. Le processeur de l'unité de traitement est configuré pour mettre en œuvre le procédé de commande selon au moins un mode de réalisation, selon les instructions du programme d'ordinateur, pour échanger avec la plateforme de gestion 101 des données afin de contrôler une ou plusieurs stations de programmation.

L'équipement utilisateur 401, 402 peut être un téléphone portable, par exemple un smartphone, une tablette, un ordinateur, un composant électronique, ou un autre appareil comportant un module de communication, un module interface utilisateur (comprenant par exemple un écran, un microphone, un haut-parleur, un clavier) et un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement, amènent cette unité de traitement à échanger des données avec la plateforme de gestion 101 selon au moins un mode de mise en œuvre du procédé de programmation proposé.

Dans un ou plusieurs modes de réalisation, certains au moins des équipements utilisateurs 401, 402 du système 500 peuvent intégrer une fonction de géolocalisation 403, par exemple conforme au système de positionnement par satellites GPS (de l'anglais «Global Positioning System») ou Galileo, couplée de manière opérationnelle avec un module (par ex. app ou Webapp logicielle) de pilotage de la station 1 de l'équipement, et configurée pour transmettre à ce module, typiquement via une API, des données de géolocalisation de l'équipement utilisateur, pour une éventuelle utilisation dans la programmation de la station 1. D'un point de vue système, la fonction de géolocalisation 403 mise en œuvre sous forme logicielle et/ou matérielle au sein d'un équipement utilisateur 401, 402 du système 500 pourra être vue comme un objet connecté générant des données tel que décrit ci-dessus.

En fonction du mode de réalisation, le module de pilotage de la station 1 dont est typiquement doté l'équipement utilisateur 401, 402 (mis en œuvre par l'application compagnon comme décrit ci-dessus en lien avec un ou plusieurs modes de réalisation), pourra être configuré pour communiquer avec la plateforme de gestion 101, par exemple par l'intermédiaire du réseau 100. A l'inverse, dans un ou plusieurs modes de réalisation, la plateforme de gestion 101 pourra être munie d'une API configurée pour échanger des données avec un ou plusieurs modules de pilotage de station de programmation, par exemple des applications de gestion de programmation respectivement exécutées sur un ou plusieurs équipements utilisateur 401, 402.

Dans un ou plusieurs modes de réalisation, la configuration (configuration initiale ou reconfiguration) et le pilotage d'une station de programmation 1 pourront être contrôlés par la plateforme de gestion 101, et des données de configuration et de pilotage mises en mémoire au sein de la plateforme de gestion 101, par exemple en lien avec un profil comprenant un identifiant et des données de configuration.

En fonction du mode de réalisation, un profil de configuration pourra être défini en lien avec une station de programmation, ou être défini en lien avec un utilisateur ou un groupe d'utilisateurs, pour être appliqué à une ou plusieurs stations de programmation. Le profil de configuration pourra contenir un ou plusieurs identifiants de station de programmation et/ou un identifiant d'utilisateur. Une hiérarchisation de différents profils pourra en outre être utilisée pour définir des niveaux d'accès à des fonctions de configuration d'une station, et/ou des niveaux de priorité de configuration.

Par exemple, un utilisateur A ayant un profil plus élevé qu'un utilisateur B pourra avoir accès à un plus grand nombre de fonctionnalités de configuration que l'utilisateur B. Pour reprendre l'exemple de la figure 1, dans un contexte domestique comprenant des adultes et des enfants, les adultes pourront se définir un profil leur permettant de contrôler l'ensemble des fonctionnalités de la station 1, et notamment la programmation de l'ensemble des équipements ou appareils 10, 11, 12 pouvant être programmés, tandis que les enfants pourront avoir un profil ne leur permettant que de programmer la lampe 12. Dans un contexte professionnel, un manager ou chef d'équipe pourra avoir un profil de configuration plus élevé que les membres de son équipe, et par ce biais pouvoir accéder à un plus grand nombre de fonctionnalités de configuration et de pilotage d'une ou plusieurs stations de programmation.

La définition de profils associés à des stations de programmation permet avantageusement de définir des niveaux hiérarchiques entre différentes stations de programmation, comme par exemple un niveau «maître» ou «administrateur» et un niveau «esclave» ou, respectivement, «standard». De tels niveaux hiérarchiques différents associés aux profils respectifs de stations de programmation permettent avantageusement de piloter un ensemble de stations de programmation par l'intermédiaire d'une seule station. Par exemple, pour un groupe de N stations de programmation, il peut être avantageux de définir un profil «administrateur» pour l'une des N stations, et un profil «standard» pour les N-1 autres stations. Les différents niveaux définis dans les profils respectivement associés aux stations peuvent par exemple avoir pour conséquence, par configuration, que les programmations associées à la station «administrateur» seront répercutées sur les stations «standard», par l'intermédiaire de la plateforme de gestion.

Par exemple, sur réception de données d'instructions de programmation en provenance d'une station de programmation parmi une pluralité de stations de programmation, les stations de programmation de la pluralité de stations fonctionnant selon l'un des modes de réalisation décrit dans les présentes, la plateforme de gestion peut, dans un ou plusieurs modes de réalisation, être configurée pour récupérer le profil de la station de programmation ayant transmis les données, et déterminer un niveau hiérarchique associé à ce profil. Dans le cas où le niveau hiérarchique déterminé correspond à un niveau supérieur dans la hiérarchie des profils prédéfinie, la plateforme de gestion peut être configurée pour transmettre tout ou partie des instructions de programmation associées à cette station aux autres stations de la pluralité de stations ayant un niveau hiérarchique associé à leur profil inférieur au niveau hiérarchique de la station. Ce procédé permet avantageusement de préempter en tout ou partie le fonctionnement de stations de programmation d'une pluralité de stations par définition de niveaux hiérarchiques associés à un profil de station, par le biais d'une ou plusieurs stations auxquelles un niveau supérieur (dénommé par exemple «master» ou «administrateur») dans la hiérarchie a été associé.

Dans un ou plusieurs modes de réalisation, une station de programmation à laquelle est associé un profil d'un premier niveau dans une hiérarchie de profils prédéfinie, peut être pilotée, et en particulier recevoir des instructions de programmation, de différentes manières : depuis une station de programmation à laquelle est associé un profil d'un deuxième niveau supérieur au premier niveau dans la hiérarchie prédéfinie, et depuis une application exécutée sur un équipement utilisateur, comme décrit dans les présentes, dans les deux cas par l'intermédiaire de la plateforme de gestion.

Le système 500 illustré sur la figure 1 comprend en outre une ou plusieurs plateforme(s) externe(s) 200, par exemple de type serveur de données (en anglais «data server», «data lake» ou «data sets»), comprenant une ou plusieurs bases de données, et qui peut (peuvent) être configurée(s) pour fournir des informations diverses à la plateforme de gestion 101, notamment encore par l'intermédiaire du réseau de communication 100. Ces informations peuvent concerner, sans que les exemples suivants soient limitatifs, des données de trafic routier, la survenue d'événements qui sont sélectionnés par un filtre prédéterminé, etc.

Dans un ou plusieurs modes de réalisation, la station 1 est en liaison de communication de données avec la plateforme de gestion 101, par exemple au moyen d'une API appropriée, et la plateforme de gestion 101 est en liaison de communication de données avec chacune des plateformes 110-112, 200 et avec celles des capteurs 120-122, au moyen d'autres interfaces de programmation applicatives appropriées.

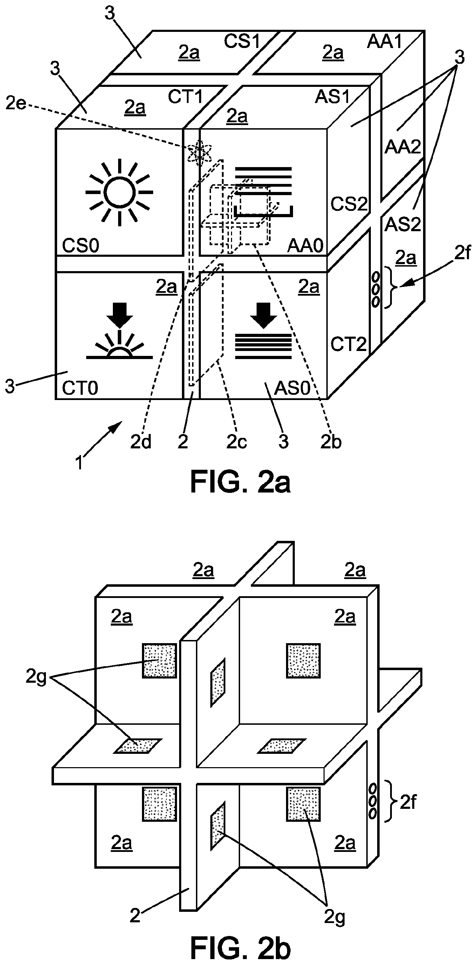

En référence aux figures 1, 2a et 2b, la station 1 comprend un support 2 et plusieurs blocs 3, par exemple huit blocs chacun en forme de cube, et qui sont appelés cubes dans la suite pour raisons de clarté et d'illustration. Dans le mode particulier de réalisation qui est représenté, le support 2 possède une forme de croix tridimensionnelle (figure 2b), qui détermine huit emplacements 2a dans chacun desquels un des cubes 3 peut être positionné. Chaque cube 3 est de préférence détachable du support 2, tout en pouvant être retenu dans l'un des emplacements 2a selon plusieurs orientations alternatives de ce cube par rapport au support 2. Dans le mode de réalisation qui est représenté, chaque cube 3 peut être positionné dans l'un des huit emplacements 2a du support 2 selon 24 orientations différentes au maximum. De nombreux dispositifs peuvent être utilisés pour retenir chaque cube 3 dans l'un des emplacements 2a du support 2, de façon détachable et compatible avec toutes les orientations du cube dans l'emplacement. Par exemple, des systèmes à base d'aimants 2g ou de clips peuvent être utilisés. En outre, le support 2 et chaque cube 3 sont pourvus d'un système de reconnaissance qui permet à un module de détection 2b incorporé au support 2 d'identifier l'orientation et l'emplacement de chaque cube 3 sur le support 2, et de détecter lorsque ce cube 3 est retiré du support 2 puis repositionné. En fonction du mode de réalisation choisi, on pourra utiliser un système de détection mécanique, par exemple à base de motifs en relief pour un système de détection mécanique, un système de détection électrique, par exemple à base de contacts métalliques, ou un système de détection optique, par exemple à base de motifs d'images.

Dans un ou plusieurs modes de réalisation, le support 2 incorpore un contrôleur qui est couplé de manière opérationnelle à un module de mémoire (non représentés sur la figure). Le contrôleur peut être configuré pour enregistrer en mémoire les orientations et emplacements de chaque cube 3 positionné sur le support 2.

Le contrôleur peut en outre être configuré pour piloter les éléments et modules de la station de programmation 1, et en particulier ceux du support 2. Le contrôleur peut comprendre un composant implémentant un ou plusieurs processeurs, et être piloté par une application ou un programme d'ordinateur, configuré(e) pour la mise en œuvre d'un ou de plusieurs modes de réalisation du procédé proposé dans les présentes. A l'initialisation, les instructions de code du programme d'ordinateur sont par exemple chargées dans une mémoire RAM du module de mémoire, avant d'être exécutées par un processeur du contrôleur. Par exemple, le contrôleur peut être de type microcontrôleur comprenant un processeur, ou de type processeur couplé à un ou plusieurs contrôleurs.

Le module de mémoire peut comprendre une ou plusieurs mémoires, par exemple de type mémoire morte ou ROM (pour «*Read-Only Memory*») et/ou de type mémoire vive RAM (pour *«Random Access Memory*»), dont un ou plusieurs supports de stockage informatique dans lesquels est stocké un programme d'ordinateur exécutable («firmware») par un processeur du contrôleur de la station de programmation 1. Le module de mémoire est de préférence choisi apte à stocker les orientations et emplacements de chaque cube 3 positionné sur le support 2 comme décrit ci-dessus, par exemple dans une mémoire flash. En fonction du mode de réalisation, la ou les mémoire(s) du module de mémoire contiennent des instructions de programme d'ordinateur qui, lorsqu'elles sont exécutées par le contrôleur, amènent ce contrôleur à effectuer ou contrôler les éléments et modules des exemples de mise en œuvre de la station de programmation 1 proposée décrits dans les présentes.

Dans un ou plusieurs modes de réalisation, le support 2 incorpore aussi un module de communication 2c, couplé de manière opérationnelle au processeur. Le module de communication 2c comprend une interface de communication sur un réseau local, de type filaire (par exemple de type Ethernet) et/ou, de préférence, de type sans fil (par exemple de type Wifi (conforme aux normes 802.11 éditées par l'organisme de normalisation IEEE (de l'anglais « *Institute of Electrical and Electronics Engineers* »)), de type Bluetooth^{®} (BT) (dans toutes ses variantes), ou Bluetooth Low Energy^{®} (BLE)). L'interface de communication sur un réseau local peut être configurée pour connecter la station de programmation 1 à un réseau local et communiquer avec d'autres nœuds du réseau local et/ou se connecter à un réseau large bande, tel que le réseau Internet, par le biais du réseau local (par exemple par l'intermédiaire d'une passerelle, telle que la passerelle de service 102, entre le réseau local et un réseau large bande, tel que le réseau 100), notamment pour établir la liaison de communication 103 avec la plateforme de gestion 101. La liaison de communication entre la station 1 et la plateforme de gestion 101 peut ainsi être mise en œuvre, dans un ou plusieurs modes de réalisation, par le module de communication 2c, et selon le mode de réalisation utiliser la liaison de communication 103 établie entre le support 2 de la station 1 et la passerelle de service 102. L'interface de communication sur un réseau local pourra être choisie pour permettre des échanges de données sécurisés depuis et vers la plateforme de gestion 101. Par exemple, l'interface de communication sur un réseau local pourra mettre en œuvre un protocole de communication conforme à la norme HTTP sécurisé (en anglais, *«HyperText Transfer Protocol Secure»),* par exemple en utilisant une connexion sécurisée de type WebSocket (conforme à la spécification («*Request for Comments»)* RFC6455 «The WebSocket Protocol» de l'IETF (de l'anglais *«Internet Engineering Task Force»)).*

En fonction du mode de réalisation, le support 2 peut incorporer en outre une alimentation 2d (comme par exemple une batterie), un module d'identification de mouvement 2e, comme par exemple un accéléromètre, et/ou des interfaces 2f qui sont destinées à l'utilisateur de la station 1, telles qu'un capteur tactile, des témoins visuels, un haut-parleur, un microphone, etc.

Les modules et unités de la station de programmation 1, dont le module de communication 2c, l'alimentation 2d, le module d'identification de mouvement 2e, et les interfaces 2f peuvent être couplés de manière opérationnelle les uns avec les autres par l'intermédiaire du contrôleur de la station de programmation 1.

Dans un ou plusieurs modes de réalisation, la plateforme de gestion 101 peut être agencée pour, par exemple au cours d'une phase de configuration de la station de programmation 1, mémoriser des appareils 10, 11, 12 à programmer au moyen de la station 1, et collecter, en provenance des plateformes 110, 111, 112 de gestion de ces appareils, des données de fonctionnement de ces appareils 10, 11, 12. Ces données de fonctionnement peuvent notamment concerner la mise en marche ou l'arrêt d'un appareil, leurs sens de fonctionnement possibles, des amplitudes de variations, des vitesses et/ou des intensités de fonctionnement, etc., tels que, selon les cas, l'ouverture ou la fermeture du volet roulant 10, un démarrage de la cafetière 11, une augmentation ou une réduction de la puissance du système d'éclairage 12,... La plateforme de gestion 101 peut aussi être configurée pour mémoriser aussi les capteurs dont les résultats de mesure ou de détection sont disponibles.

La plateforme de gestion 101 peut ainsi être configurée pour stocker en mémoire l'environnement de programmation d'appareils ou d'objets connectés dont le fonctionnement peut être programmé. L'architecture du système 500 dans laquelle la plateforme de gestion 101 est placée au centre de toutes les communications de données relatives à la programmation d'un appareil permet avantageusement d'éviter à l'utilisateur toute dépendance avec les spécificités de chaque appareil programmable et de son environnement de programmation. Cette architecture permet en outre une grande flexibilité et une forte capacité d'adaptation aux évolutions d'appareils ou d'objets connectés dont le fonctionnement peut être programmé, ou de leur environnement de programmation. En effet, les évolutions d'environnement de programmation peuvent être traitées au niveau de la plateforme de gestion 101, et être rendues totalement transparentes à l'utilisateur de la station de programmation 1. De plus, l'ajout ou le retrait d'un appareil 10, 11, 12 dont le fonctionnement peut être programmé, de la gestion de programmation fournie par le système proposé, peut aussi être géré au niveau de la plateforme de gestion 101, la station de programmation 1 pouvant être configurée pour être pilotée par la plateforme de gestion 101, notamment pour effectuer des mises à jour de programmation reflétant des modifications des appareils dont le fonctionnement est programmé.

Ainsi, dans un ou plusieurs modes de réalisation, la plateforme de gestion est configurée pour qu'un appareil ou un capteur additionnel puisse être ajouté ou retiré par l'utilisateur à ceux qui sont déjà mémorisés par la plateforme de gestion 101. Une telle modification peut par exemple être effectuée en utilisant une interface utilisateur disponible via une application appropriée (par exemple de type application mobile sur un smartphone ou une tablette, ou de type Webapp sur un navigateur exécuté sur un ordinateur personnel, un smartphone ou une tablette) exécutée sur un équipement utilisateur 401, 402, comme décrit ci-dessus.

A partir de la connaissance des objets (incluant les appareils et capteurs) qui sont disponibles pour la station 1, et de préférence aussi à partir d'une connaissance de l'écosystème auquel la station 1 est dédiée, la plateforme 101 établit un ensemble d'instructions de programmation, ou d'éléments d'instructions de programmation, qui sont susceptibles de présenter un intérêt pour l'utilisateur de l'écosystème auquel appartiennent les appareils mémorisés. Dans un ou plusieurs modes de réalisation, une instruction de programmation peut être réduite à une instruction de mise en marche ou d'arrêt d'un appareil, qui est destinée à être exécutée immédiatement dès lors que l'instruction est sélectionnée. Par exemple, une telle instruction simple peut être le démarrage ou l'arrêt de la cafetière 11. Dans des cas les plus élaborés, une instruction de programmation peut être formée par la combinaison de deux éléments d'instruction, qui sont respectivement une condition d'activation et une action à déclencher lorsque la condition d'activation est satisfaite. Par exemple, lorsque le niveau de lumière ambiante qui est détecté par le capteur de luminosité 121 devient inférieur à un seuil déterminé, le système d'éclairage 12 peut être mis en marche.

Dans une version encore plus élaborée, applicable à certaines au moins des instructions de programmation qui peuvent être sélectionnées au moyen de la station 1, une instruction de programmation peut être constituée par la combinaison de quatre éléments, qui appartiennent aux catégories suivantes :
- éléments d'instructions de programmation qui indiquent des variables de condition, c'est-à-dire qui indiquent chacun une ou plusieurs variable(s) à partir de laquelle (desquelles) le fonctionnement d'un des appareils sera activé ou non. Cette première catégorie peut être appelée celle des thèmes de programmation, dans la mesure où la variable de condition détermine un thème d'action par l'un des appareils ;
- éléments d'instructions de programmation qui indiquent une condition à examiner, telle que, par exemple, un seuil de valeur à dépasser. La combinaison d'une variable de condition avec une condition, au sein d'une instruction de programmation, constitue une condition d'activation d'au moins un des appareils ;
- éléments d'instructions de programmation qui désignent l'un au moins des appareils à activer ; et
- éléments d'instructions de programmation qui désignent un mode de fonctionnement à activer ou interrompre pour l'appareil désigné. La combinaison, au sein d'une instruction de programmation, de la désignation d'un appareil avec celle d'un fonctionnement pour cet appareil, constitue une action à exécuter.

Une instruction de programmation peut alors être construite en combinant une condition d'activation avec une action à exécuter. Elle résulte donc de la combinaison de quatre éléments d'instruction qui appartiennent chacun à l'une des quatre catégories énoncées ci-dessus, aboutissant à déclencher un fonctionnement d'appareil si la condition qui porte sur la variable indiquée est satisfaite. Un tel mode de construction est donc de type «condition/action».

Dans des modes de réalisation qui sont conformes à la géométrie qui est représentée sur la figure 2a pour la station 1, une instruction de programmation complète peut être constituée par quatre éléments d'instruction qui apparaissent sur les faces exposées de quatre cubes 3 qui sont adjacents sur un même côté du support 2. Ainsi, l'instruction de programmation complète est visible pour l'utilisateur en observant le côté correspondant de la station 1. Dans un ou plusieurs modes de réalisation, deux faces de cubes adjacentes peuvent correspondre à la définition d'une condition, comprenant par exemple une face de cube qui établit un thème et l'autre face de cube qui établit une condition sur ce thème. Deux autres faces de cubes adjacentes peuvent correspondre à la définition d'une action à effectuer lorsque la condition qui est définie par les deux premières faces de cubes est réalisée, l'action comprenant par exemple un appareil ou objet à commander et une commande à mettre en œuvre sur cet appareil ou objet. Dans l'exemple de la figure 2a, les faces de cubes 3 qui sont exposées sur le devant de la station 1 par rapport à son orientation dans la figure (faces CS0, CT0, AA0, AS0), sont orientées de manière à placer sur la partie gauche du côté exposé les deux faces de cubes relatives à la condition, et à placer sur la partie droite du côté exposé les deux faces de cubes relatives à l'action. Ces faces exposées indiquent les éléments d'instruction de programmation suivants :
- la variable de condition est affichée sur le cube 3 à l'emplacement 2a supérieur gauche (face CS0, CS pour l'anglais «Condition Setting»), et est la luminosité ambiante (thème de programmation pour cet exemple), par exemple mesurée par le capteur 121 de la figure 1 ;
- la condition est affichée sur le cube 3 à l'emplacement 2a inférieur gauche (face CT0, CT pour l'anglais «Condition Threshold»), et est une diminution de la luminosité ambiante ;

- l'appareil concerné est affiché sur le cube 3 à l'emplacement 2a supérieur droit (face AA0, AA pour l'anglais «Action Actuator»), et est le(s) volet(s) roulant(s) 10 ; et
- le fonctionnement concerné pour cet (ces) appareil(s) est affiché sur le cube à l'emplacement 2a inférieur droit (face AS0, AS pour l'anglais «Action Setpoint»), et est un abaissement ou, selon le mode de réalisation, une fermeture du (des) volet(s) roulant(s) 10.

Cette logique de positionnement des faces des cubes qui sont exposées sur un même côté de la station 1 peut être reprise sur d'autres côtés de la station 1, comme illustré sur la figure 2a, avec le côté supérieur de la station 1 ayant un cube à l'emplacement supérieur gauche avec une face exposant une variable de condition ou un thème (face CS1), un cube à l'emplacement inférieur gauche avec une face exposant une condition correspondant à la variable ou au thème (face CT1), un cube à l'emplacement supérieur droit avec une face exposant un appareil ou objet concerné par la programmation (face AA1), et un cube à l'emplacement inférieur droit avec une face exposant une action à effectuer sur l'appareil ou l'objet concerné (face AS1). Il en est de même dans l'exemple illustré sur la figure 2a pour le côté droit de la station de programmation 1, avec l'ordonnancement sur ce côté des faces CS2, CT2, AA2 et AS2.

Dans un ou plusieurs modes de réalisation, une variable de condition peut être composée, c'est-à-dire qu'elle peut résulter de la combinaison de plusieurs variables sur l'ensemble desquelles la condition est destinée à être appliquée. Par exemple, une variable composée qui permet de détecter le coucher du soleil peut être constituée par la combinaison de l'heure avec le niveau de luminosité ambiante. La condition elle-même peut être constituée par un intervalle horaire par rapport auquel l'heure actuelle va être comparée, et par un seuil de luminosité ambiante.

De même, un élément d'instruction de programmation peut aussi, dans un ou plusieurs modes de réalisation, être composé en désignant simultanément plusieurs appareils, d'un même type ou d'un type différent, tels que par exemple, un ou plusieurs volets roulants 10, éventuellement désignés avec système d'éclairage 12. L'instruction qui désigne le mode de fonctionnement à activer peut alors indiquer un fonctionnement pour chaque appareil désigné.

L'instruction de programmation qui résulte de l'exemple qui vient d'être énuméré est alors : si l'heure est dans l'intervalle horaire prédéterminé et la luminosité ambiante inférieure au seuil prédéterminé, alors la fermeture du volet roulant 10 et l'allumage du système d'éclairage 12 sont activés. Cet exemple correspond à la face frontale de la station 1 telle que représentée dans la figure 2a, et n'est donné qu'à titre d'illustration.

Dans un ou plusieurs modes de réalisation, des données de géolocalisation d'un utilisateur, obtenues par le biais d'un dispositif de géolocalisation GPS 403, par exemple incorporé dans un équipement utilisateur 401, 402, qui les aura communiquées à une application native sur un téléphone mobile 401 ou à une webapp sur un ordinateur personnel 402, pour être ensuite transmises à la plateforme de gestion 101, peuvent être utilisées dans des instructions de programmation en tant que variable de condition, par exemple pour déclencher une ouverture d'un portail électrique lorsqu'un occupant se rapproche du local d'habitation. La station 1 permet alors avantageusement de programmer la gestion d'objets connectés, par exemple situés à l'intérieur ou dans le voisinage d'une zone géographique (par exemple une maison d'habitation), en créant des corrélations entre des objets connectés de la zone géographique de la maison, et des données de géolocalisation d'utilisateur(s) de ces objets connectés (telles que, par exemple, des données de géolocalisation relative d'un utilisateur par rapport à la zone géographique ou, selon les modes de réalisation, les objets connectés qui sont pilotés), par l'intermédiaire de la plateforme de gestion 101. En fonction du mode de réalisation, d'autres variables de condition peuvent aussi être basées sur des données fournies par la plateforme externe 200, ou encore concerner des messages reçus dans une boîte aux lettres électronique.

Dans un ou plusieurs modes de réalisation, la plateforme de gestion 101 associe lors d'une phase de configuration des éléments d'instructions de programmation avec certaines au moins des faces des cubes 3 lorsqu'ils sont positionnés sur le support 2. Pour cela, un système de repérage des emplacements 2a qui sont disponibles pour les cubes 3 sur le support 2 peut être défini et mémorisé au niveau de la plateforme de gestion 101. Préférablement, l'association d'éléments d'instructions de programmation avec des faces de cubes 3 peut être effectuée en prenant en compte en outre des particularités du lieu auquel la station 1 est dédiée, telles que par exemple des particularités d'un local professionnel ou celles d'un lieu d'habitation. Par exemple, de telles particularités peuvent concerner des horaires auxquels sont présents des occupants de ces lieux. Autrement dit, l'association d'éléments d'instructions de programmation avec des faces de cubes 3 peut avantageusement prendre en compte un contexte qui est identifié pour l'écosystème auquel la station 1 est dédiée.

Dans un ou plusieurs modes de réalisation, un ou plusieurs des cubes 3 de la station 1 peuvent être configurés pour afficher une instruction de programmation ou élément d'instruction de programmation sur une de leurs faces, en affichant une information qui est cohérente avec la configuration établie au niveau de la plateforme de gestion 101. De tels affichages permettent avantageusement à un utilisateur de sélectionner les instructions de programmation ou éléments d'instructions de programmation qu'il désire en orientant les cubes 3 sur le support 2 de façon à exposer les faces des cubes sur lesquelles ces instructions de programmation ou éléments d'instructions de programmation sont affichés. Les orientations des cubes 3 qui sont ainsi sélectionnées par l'utilisateur sont détectées par le module de détection 2b, puis transmises par le module de communication 2c à la plateforme de gestion 101, qui les stocke en mémoire. A partir de ces orientations de cubes 3, la plateforme de gestion 101 restitue les instructions de programmation sélectionnées par l'utilisateur, puis collecte par l'intermédiaire du réseau de communication 100, les données (par exemple des résultats de mesure et de détection, ou des données fournies par un serveur de données, par exemple un serveur de données météorologiques) qui sont utilisées dans ces instructions de programmation. Alors, sur détection qu'une condition d'activation de l'une de ces instructions de programmation est satisfaite, la plateforme de gestion 101 adresse une consigne d'activation du (des) fonctionnement(s) de l'appareil (des appareils) qui est (sont) désigné(s) dans l'instruction de programmation, à chaque plateforme d'un tel appareil désigné. Cette dernière déclenche alors à distance le fonctionnement de l'appareil concerné, en utilisant un mode de communication qui est disponible pour cet appareil.

Dans des modes préférés de réalisation, certaines au moins des faces des cubes 3, voire toutes leurs faces, comportent un afficheur qui est capable d'afficher une instruction de programmation, ou un élément d'instruction de programmation tel que défini plus haut. Un tel affichage peut être mis en œuvre pour présenter des symboles ou pictogrammes variés, qui sont de préférence évocateurs de l'élément d'instruction de programmation concerné. Par exemple, dans la figure 2a et conformément à l'orientation de cette figure, la face du cube supérieur gauche qui est exposée en avant (CS0) affiche un pictogramme de la luminosité ambiante pour spécifier cette variable de condition, la face qui est exposée en avant pour le cube inférieur gauche (CT0) affiche un pictogramme de coucher du soleil en tant que condition, la face qui est exposée en avant pour le cube supérieur droit (AA0) affiche un pictogramme du volet roulant 10 en tant qu'appareil(s) à activer, et la face qui est exposée en avant du cube inférieur droit (AS0) affiche un pictogramme de fermeture pour spécifier un tel fonctionnement de fermeture pour le(s) volet(s) roulant 10. Avantageusement, les afficheurs utilisés sont du type à encre électronique, particulièrement favorables pour leur consommation électrique qui est très basse. Cette très faible consommation électrique permet de réaliser la rémanence de l'affichage avec un circuit électrique utilisant un ou plusieurs condensateur(s) alors que le cube n'est plus alimenté, par exemple lorsqu'il est détaché du support 2. Alternativement, les afficheurs utilisés peuvent être du type à diodes électroluminescentes, procurant des contrastes d'affichage qui sont très élevés.

Dans un ou plusieurs modes de réalisation, les composants qui sont incorporés dans chaque cube 3, outre les afficheurs de ses faces, sont préférablement limités à des composants simples, peu onéreux, peu consommateurs d'énergie et peu nombreux. Toutefois, ils permettent de proposer à l'utilisateur un choix entre plusieurs instructions de programmation ou éléments d'instructions de programmation, qui sont affiché(e)s sur certaines au moins des faces du cube 3 lorsque l'utilisateur détache ce cube du support 2. En particulier, dans un mode de réalisation, chaque cube 3 peut incorporer un condensateur qui est chargé électriquement par la batterie 2d du support 2 lorsque ce cube est positionné dans l'un des emplacements 2a, et qui fournit l'énergie nécessaire à tous les composants du cube lorsque celui-ci est retiré du support 2. Cette énergie assure notamment les affichages sur les faces du cube, qui sont fixes une fois que le cube a été retiré du support, et assure aussi le fonctionnement d'éventuelles mémoires internes au cube qui seraient nécessaires pour cet affichage.

Un tel mode de réalisation, à afficheurs de cubes, est particulièrement avantageux en ce qu'il permet notamment une grande variété des appareils qui peuvent être programmés avec la station 1, sans devoir adapter ou changer les cubes en fonction des appareils, et en ce qu'il permet de proposer plus facilement à l'utilisateur des instructions de programmation qui sont contextualisées.

Pour cela, la plateforme de gestion 101 peut être agencée pour configurer la station 1 comme décrit plus haut, en affectant un élément d'instruction de programmation à chaque face de cube 3, en fonction de la position du cube et de son orientation sur le support 2. Pour les faces qui sont exposées lorsque tous les cubes 3 sont sur le support 2, et dans le cas d'afficheurs sur ces faces, cette affectation est transmise par la plateforme de gestion 101 au module de communication 2c de la station 1, puis par ce module de communication 2c à chaque cube 3. Les éléments d'instructions de programmation qui sont affectés aux faces exposées des cubes 3 sont alors affichés sur celles-ci. Cet état d'affichage pour l'ensemble de la station 1 indique avantageusement l'état de programmation qui est en vigueur, tel que mémorisé pour la station 1 au niveau de la plateforme de gestion 101.

Dans un ou plusieurs modes de réalisation, la plateforme de gestion 101 peut en outre affecter des éléments d'instructions de programmation supplémentaires aux faces des cubes 3 qui ne sont pas exposées, c'est-à-dire celles qui sont tournées vers le support 2 pour la géométrie de la station 1 qui est représentée à la figure 2a. Ces éléments d'instructions de programmation supplémentaires constituent des choix qui sont disponibles pour l'utilisateur lorsqu'il retire l'un des cubes 3 du support 2, afin de modifier l'une des instructions de programmation. La sélection de ces éléments d'instructions de programmation supplémentaires peut être réalisée par la plateforme de gestion 101 en fonction de l'état de programmation en vigueur, et éventuellement aussi en fonction d'autres paramètres en vigueur pour l'écosystème auquel la station 1 est dédiée. Dans le jargon de l'Homme du métier, une telle sélection est dite contextuelle, ou intelligente. Dans un ou plusieurs modes de réalisation, des stratégies de sélection peuvent être mises en œuvre par la plateforme de gestion 101 pour sélectionner les éléments d'instructions de programmation supplémentaires à affecter aux faces non-exposées des cubes 3. La plateforme de gestion 101 peut être agencée pour transmettre ces éléments d'instructions de programmation supplémentaires au module de communication 2c de la station 1, et chacun des cubes 3 peut être agencé pour mémoriser au sein de ce cube 3 les éléments d'instructions de programmation supplémentaires qui concernent ses faces non-exposées, en relation avec les faces auxquelles ils ont été affectés. Alors, lorsque l'utilisateur retire l'un des cubes 3, les éléments d'instructions de programmation supplémentaires qui ont été déterminés par la plateforme de gestion 101 sont affichés sur les faces de ce cube qui n'étaient pas exposées antérieurement sur le support 2. Ils deviennent ainsi visibles pour l'utilisateur lorsque celui-ci retourne le cube retiré.

Dans un ou plusieurs modes de réalisation, pour offrir un choix plus large d'éléments d'instructions de programmation à l'utilisateur, des éléments d'instructions de programmation supplémentaires peuvent aussi être affectés, par exemple par la plateforme 101, aux faces des cubes 3 qui sont exposées sur le support 2. Tous les éléments d'instructions de programmation supplémentaires sont alors mémorisés dans les cubes 3, chaque élément d'instruction de programmation supplémentaire dans celui des cubes 3 qui possède la face à laquelle cet élément d'instruction supplémentaire a été affecté, que cette face soit exposée ou non.

La station de programmation 1 peut être configurée pour que, suite au retrait par l'utilisateur de l'un des cubes 3, les éléments d'instructions de programmation en vigueur qui sont affichés sur ce cube soient mis en mémoire dans la station 1, et remplacés sur les afficheurs de ses faces par les éléments d'instructions de programmation supplémentaires, que ces faces aient été préalablement exposées ou non. Ainsi, l'utilisateur dispose de possibilités de choix plus larges pour sélectionner un nouvel élément d'instruction de programmation en retirant l'un des cubes 3, puis en le retournant pour voir tous les éléments d'instructions de programmation qui sont affichés. Lorsque ce cube 3 est repositionné par l'utilisateur sur le support 2, l'élément d'instruction de programmation qui est sélectionné par la nouvelle orientation du cube est maintenu en affichage sur la face exposée concernée. Dans un ou plusieurs modes de réalisation, cette face exposée concernée peut être prédéfinie par configuration, et correspondre par exemple à la face supérieure du cube lorsqu'il est positionné sur le support, cette face correspondant ainsi au côté supérieur, ou à la face supérieure de la station 1 lorsque la station 1 a elle-même une forme substantiellement parallélépipédique (par exemple cubique). En fonction du mode de réalisation, l'identification d'un côté de la station 1 sur lequel se trouve la face exposée d'un cube 3 qui va être modifiée peut être faite sur la base du côté de la station correspondant à la configuration (par exemple identification du côté correspondant à la face supérieure du cube) après détection d'un mouvement de la station 1, comme décrit ci-dessus, en particulier sur détection d'une fin de mouvement de la station 1 par l'utilisateur, par exemple après détection d'une absence de mouvement de la station 1, ou d'une absence de mouvement de la station d'une amplitude supérieure à un seuil prédéterminé, ou d'une stabilisation de l'orientation de la station 1 ou de l'orientation d'un des côtés de la station 1, ce pendant une période de temps prédéterminée, par exemple de l'ordre de quelques secondes. Dans d'autres modes de réalisation, le côté de la station 1 qui est destiné à être concerné par la modification de programmation à venir peut être désigné par le sens d'un déplacement par translation de la station 1 qui est imprimé par un utilisateur, et identifié par le module d'identification de mouvement 2e. Un tel déplacement qui est naturel peut être un rapprochement de la station vers l'utilisateur après qu'il l'a orientée pour voir le côté à modifier. La station n'aurait plus besoin alors d'avoir une face supérieure à peu près horizontale. Dans un ou plusieurs modes de réalisation, la station 1 peut être configurée pour modifier l'affichage (par exemple par clignotement, affichage intermittent, modification des dimensions de l'affichage, etc.) des éléments affichés sur le côté identifié comme étant concerné par la modification. Le module d'identification de mouvement 2e (par exemple un accéléromètre) dont la station de programmation 1 peut être pourvue, pourra être utilisé pour identifier cette face du cube ou ce côté de la station 1 qui est concerné par les éventuelles modifications de programmation effectuées par un utilisateur. Dans un ou plusieurs modes de réalisation, l'identification d'un côté de la station 1 concerné par une éventuelle modification effectuée par un utilisateur pourra être effectuée dès lors qu'un mouvement de la station 1 est détecté par le module d'identification de mouvement 2e, ce sur quoi le côté identifié sera mis en mémoire par la station 1. Cela permet avantageusement de conserver en mémoire les données relatives à un côté de la station 1 éventuellement concerné par une modification avant que l'utilisateur ne retire un cube 3 du support 2. Dans un ou plusieurs modes de réalisation, les autres faces exposées pourront alors à nouveau afficher les mêmes éléments d'instructions de programmation qu'avant le retrait du cube, ceux-ci restant en vigueur car n'ayant pas été considérés comme concernés par l'éventuelle modification.

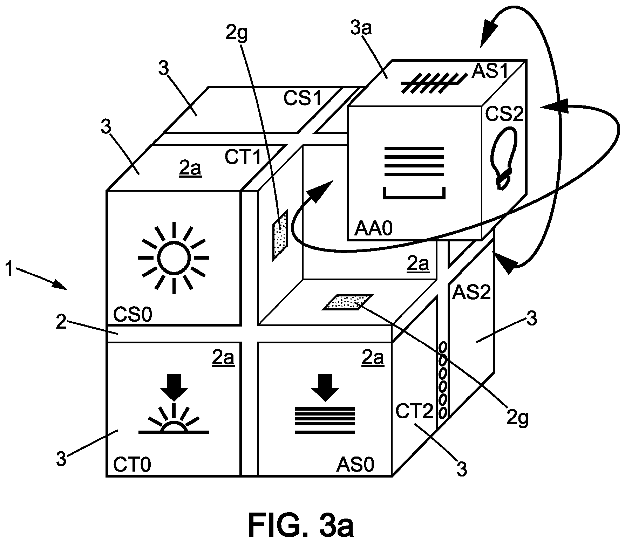

Ainsi, la modification d'une instruction de programmation peut donc être effectuée par l'utilisateur, dans un ou plusieurs modes de réalisation, de la façon suivante, en référence à la figure 3a :
- l'utilisateur saisit dans ses mains la station 1 avec les huit cubes 3 positionnés sur le support 2. L'accéléromètre 2e qui est incorporé au support 2 détecte le mouvement de la station 1, identifie le côté de la station 1 sur lequel se trouve la face exposée d'un cube 3 qui va être modifiée (par exemple par configuration le côté de la station 1 correspondant à la face supérieure du cube avant détection du mouvement), et peut en outre déclencher une mise-à-jour des éléments d'instructions de programmation supplémentaires qui sont mémorisés au niveau de la station 1, par exemple dans les cubes 3 ;
- dans un mode de réalisation, l'utilisateur peut tourner la station 1 de façon à voir celui des côtés de la station sur lequel est affichée l'instruction de programmation qu'il souhaite modifier. Dans ce cas de figure, la station 1 peut être configurée pour que ce mouvement soit aussi détecté par l'accéléromètre 2e, afin d'identifier le côté de la station 1 sur lequel se trouve la face exposée d'un cube 3a qui va être modifiée ;
- l'utilisateur retire du support 2 le cube 3a qui correspond à l'élément à modifier de cette instruction de programmation. Ce détachement du cube 3a est détecté par le cube 3a lui-même, et celui-ci affiche sur ses faces les éléments d'instructions de programmation supplémentaires qu'il a en mémoire ;
- l'utilisateur tourne ensuite le cube 3a qu'il a retiré pour déterminer celle des faces de ce cube qui affiche l'élément d'instruction de programmation qu'il désire adopter. Cette manipulation du cube 3a est illustrée par la figure 3a, qui montre aussi des aimants 2g de rétention du cube 3a dans l'un des emplacements 2a ; et
- l'utilisateur repositionne le cube 3a sur le support 2 en exposant la face qui affiche l'élément d'instruction de programmation adopté sur le côté de la station 1 identifié comme étant le côté concerné par la modification.

Dans l'exemple illustré par la figure 3a, l'utilisateur manipule le cube 3a supérieur droit, et positionne ce cube de manière à placer sur le côté de la station 1 sur lequel sont déjà positionnées une face de cube définissant le thème de la luminosité (face CSO du cube 3 en haut à gauche), une face de cube définissant une condition relative au thème de la luminosité (face CTO du cube 3 en bas à gauche définissant une condition du type «si la luminosité baisse en-deçà d'un certain seuil»), et une face de cube définissant une action à réaliser (face ASO du cube 3 en bas à droite définissant une action de type «baisser les volets»), une face du cube 3a qui définit l'objet sur lequel une action définie doit être exercée (face AAO du cube 3a en haut à droite définissant un ou plusieurs volets d'une zone géographique donnée). Ce cube supérieur droit 3a permet ainsi, en combinaison avec les autres cubes 3 positionnés sur un même côté de la station 1, de définir une programmation de type : si la luminosité baisse en-deçà d'un certain seuil, baisser le(s) volet(s) d'une zone géographique donnée.

Dans un ou plusieurs modes de réalisation, les autres faces (AS1, CS2) du cube 3a qui étaient exposées avant que ce dernier soit manipulé par l'utilisateur, ne sont pas modifiées par la manipulation du cube 3a, et retrouvent leurs affichages et configurations d'origine, c'est-à-dire telles qu'elles étaient avant la manipulation du cube 3a. Cette fonctionnalité de la station de programmation 1 peut par exemple utiliser le contrôleur et une mémoire intégrés au support 2 de la station 1, en configurant la station 1 pour mémoriser les affichages et configurations des cubes 3 positionnés sur le support 2, de manière à retrouver et appliquer les configurations des faces non concernées par la manipulation d'un cube 3a lorsque ce cube 3a est repositionné sur le support 2.

Le module de détection 2b identifie alors le cube 3a dont l'orientation sur le support 2 a été modifiée par l'utilisateur, ainsi que sa nouvelle orientation sur le support 2. Le module 2c transmet à la plateforme 101, par le réseau de communication 100, des données qui représentent l'identification du cube 3a dont l'orientation a été modifiée, et sa nouvelle orientation. La plateforme 101 en déduit celle de ses faces qui est nouvellement exposée, et construit, à partir de l'élément d'instruction de programmation qui est affecté à cette face (face AAO sur la figure 3a), l'instruction de programmation qui est nouvellement en vigueur. Elle la mémorise puis, sur détection que la condition d'activation de cette instruction de programmation (pour l'exemple illustré sur la figure 3a, la réception de données, en provenance de plateforme(s) de gestion de capteur(s) de luminosité pour une zone géographique donnée, indiquant que la luminosité est descendue en-deçà d'un certain seuil) est satisfaite, elle donne instruction à la(les) plateforme(s) de chaque appareil concerné par l'instruction de programmation (pour l'exemple illustré sur la figure 3a, la ou les plateforme(s) de pilotage d'un ou de plusieurs volet(s) installé(s) sur la zone géographique) d'activer cet(ces) appareil(s) conformément à l'instruction de programmation (pour l'exemple illustré sur la figure 3a, baisser le ou les volet(s) installé(s) sur la zone géographique).

Dans un ou plusieurs modes de réalisation, la station de programmation 1 et la plateforme de gestion 101 peuvent être configurées pour que la modification d'un premier élément d'instruction de programmation, par exemple effectuée par un utilisateur, conduise, en fonction de la modification, à modifier un deuxième élément d'instruction de programmation, sur la base de la modification du premier élément d'instruction de programmation, de manière à assurer une cohérence entre les premier et deuxième éléments d'instruction de programmation tels que modifiés.

Par exemple, si la modification du premier élément d'instruction de programmation concerne un élément d'instruction relatif au thème de la programmation (faces CSO ou CTO exposées sur la station 1 telle qu'illustrée sur la figure 3a), cette modification peut entraîner une modification d'un deuxième élément d'instruction de programmation, lui aussi relatif au thème de la programmation (respectivement faces CTO ou CSO exposées sur la station 1 telle qu'illustrée sur la figure 3a). De même, si la modification du premier élément d'instruction de programmation concerne un élément d'instruction relatif à une condition dans la programmation (faces CSO ou CTO exposées sur la station 1 telle qu'illustrée sur la figure 3a), cette modification peut entraîner une modification d'un deuxième élément d'instruction de programmation, lui aussi relatif à la condition (respectivement faces CTO ou CSO exposées sur la station 1 illustrée sur la figure 3a). Enfin, si la modification du premier élément d'instruction de programmation concerne un élément d'instruction de programmation relatif à une action dans la programmation (faces AAO ou ASO exposées sur la station 1 telle qu'illustrée sur la figure 3a), cette modification peut entraîner une modification d'un deuxième élément d'instruction de programmation, lui aussi relatif à l'action dans la programmation (respectivement face ASO ou AAO exposées sur la station 1 illustrée sur la figure 3a).

En référence à la figure 1, des données relatives au premier élément d'instruction de programmation tel que modifié peuvent être transmises par la station de programmation 1 à la plateforme de gestion 101, comme décrit ci-dessus. La plateforme de gestion 101 peut être configurée pour, sur détection de la modification du premier élément d'instruction de programmation, analyser l'instruction de programmation, c'est-à-dire la combinaison d'éléments d'instruction de programmation à laquelle appartient le premier élément d'instruction de programmation modifié, et déterminer si une modification d'un deuxième élément d'instruction de programmation de la combinaison doit être effectuée et, le cas échéant, identifier cette modification. Cette analyse peut être conduite en fonction des données relatives aux instructions de programmation, et en particulier aux éléments d'instruction de programmation. Par exemple, les éléments d'instruction de programmation relatifs à un thème peuvent être définis de manière à comprendre un identifiant de thème, de sorte qu'une modification de l'identifiant de thème sur un premier élément d'instruction de programmation d'une combinaison d'éléments d'instruction peut conduire à une modification d'un deuxième élément d'instruction de la combinaison en fonction de cet identifiant de thème. De même, les éléments d'instruction de programmation relatifs à un objet ou un appareil peuvent être définis de manière à comprendre un identifiant d'objet ou de type d'objet, de sorte qu'une modification de l'identifiant d'objet ou de type d'objet sur un premier élément d'instruction de programmation d'une combinaison d'éléments d'instruction peut conduire à une modification d'un deuxième élément d'instruction de programmation de la combinaison en fonction de cet identifiant d'objet ou de type d'objet. Une fois la modification du deuxième élément d'instruction de programmation déterminée, la plateforme de gestion 101 peut transmettre à la station de programmation 1 des données relatives au deuxième élément d'instruction de programmation tel que modifié. Sur réception de ces données, la station de programmation 1 peut être configurée pour mettre à jour l'affichage sur la face du cube 3 concernée par cette deuxième modification en fonction des données reçues.

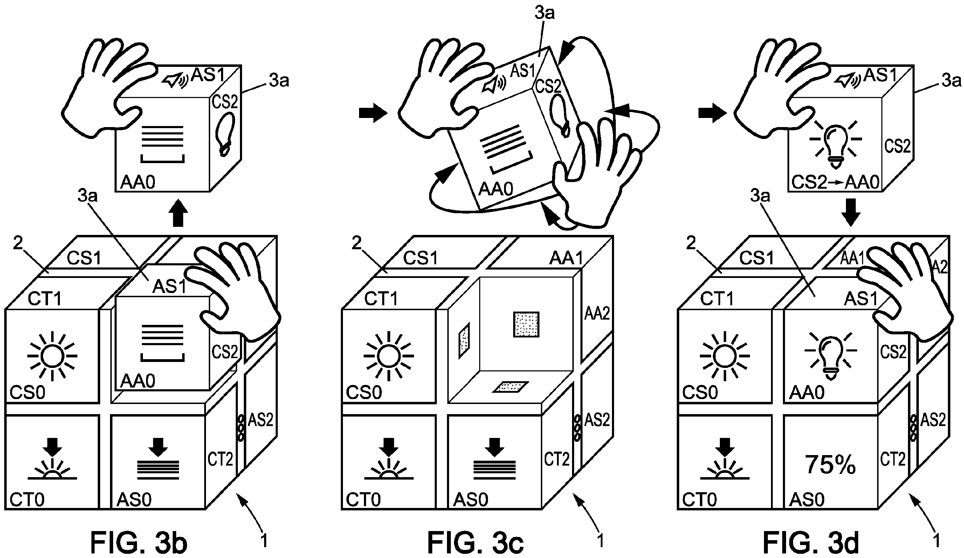

Les figures 3b, 3c, 3d illustrent un exemple de modification d'un deuxième élément d'instruction de programmation suite à la modification d'un premier élément d'instruction de programmation effectuée par un utilisateur sur la station 1, telle que décrite ci-dessus en référence à la figure 3a, selon un ou plusieurs modes de réalisation :
- l'utilisateur saisit dans ses mains la station 1 avec les huit cubes positionnés sur le support 2, et retire du support 2 le cube 3a qui correspond à un élément à modifier dans la programmation affichée sur les faces CS0, CT0, AA0, ASO des cubes formant un côté de la station 1 (figure 3b). Ce détachement du cube 3a est détecté par le cube 3a lui-même, et celui-ci affiche sur ses faces (AS1 et CS2 notamment), les éléments d'instructions de programmation supplémentaires qu'il a en mémoire (appareil de restitution sonore affiché sur la face AS1 du cube 3a, et appareil d'éclairage affiché sur la face CS2 du cube 3a) ;
- l'utilisateur tourne ensuite le cube 3a qu'il a retiré pour déterminer celle des faces de ce cube qui affiche l'élément d'instruction de programmation qu'il désire adopter. Cette manipulation du cube 3a est illustrée par la figure 3c ; et
- l'utilisateur repositionne le cube 3a sur le support 2 en exposant la face qui affiche l'élément d'instruction de programmation adopté sur le côté de la station 1 identifié comme étant le côté concerné par la modification (figure 3d). Dans l'exemple illustré, l'utilisateur choisit de modifier l'élément d'instruction de programmation qui correspond à la face AAO du cube 3a, affichant initialement un appareil de type volet ou store, en le remplaçant par l'élément d'instruction de programmation qui correspond à la face CS2 du cube 3a, affichant un appareil d'éclairage après détachement du cube 3a. La face AAO est ainsi modifiée pour correspondre à un élément d'instruction de programmation qui avant la modification correspondait à la face CS2 ;
- sur repositionnement du cube 3a sur le support 2, des données relatives à l'élément d'instruction de programmation correspondant à la face AAO sont transmises à la plateforme de gestion 101 de la figure 1. La plateforme de gestion 101 détecte une modification de l'élément d'instruction de programmation correspondant à la face AAO de la station 1, puis analyse la combinaison d'éléments d'instruction de programmation correspondant au côté de la station de programmation 1 qui est concerné par la modification (thème de la luminosité (sur la face CS0), condition de baisse de la luminosité (sur la face CT0), appareil d'éclairage à actionner (sur la face AA0) et action correspondant à la fermeture d'un volet ou d'un store (sur la face ASO)). La plateforme de gestion détecte une incompatibilité ou, selon le mode de réalisation, une absence ou un défaut de correspondance entre deux éléments d'instruction de programmation dans cette combinaison, en l'occurrence dans l'exemple illustré entre l'appareil à actionner et l'action à effectuer sur cet appareil, ou, selon les modes de réalisation, entre le type d'appareil à actionner et le type d'action à réaliser. Comme décrit ci-dessus, cette détection peut par exemple utiliser la détection d'une différence d'identifiants associés respectivement au type d'appareil à actionner et au type d'action à réaliser. Sur détection de cette absence de correspondance, la plateforme de gestion peut être configurée pour déterminer une modification d'élément d'instruction de programmation permettant de corriger l'absence de correspondance détectée. De préférence, la plateforme de gestion sera configurée pour choisir une modification d'élément d'instruction de programmation qui n'impacte pas l'élément d'instruction de programmation pour lequel elle a reçu des données (dans l'exemple illustré sur les figures 3b, 3c et 3d : l'élément d'instruction de programmation correspondant à la face AA0). Dans l'exemple illustré sur la figure 3d, une modification de l'élément d'instruction de programmation correspondant à la face ASO est déterminée, pour remplacer l'action de fermeture de volet ou de store par une action d'allumage d'éclairage à un niveau de 75% du niveau maximum d'éclairage de l'appareil actionné. Des données relatives à l'élément d'instruction de programmation ainsi modifié sont transmises à la station de programmation 1, qui affiche en retour l'élément d'instruction de programmation modifié sur la face ASO de la station 1.

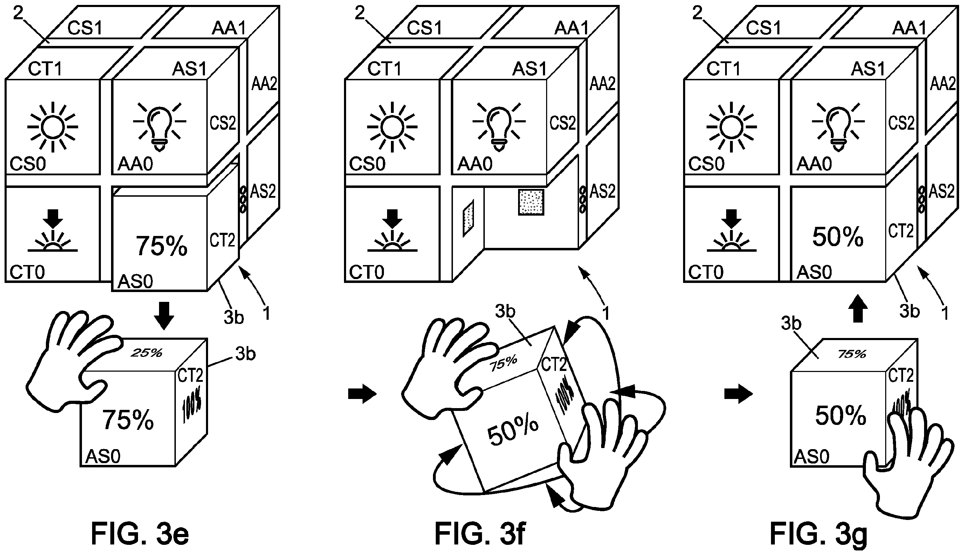

Les figures 3e, 3f et 3g illustrent une modification par l'utilisateur d'un élément d'instruction de programmation sur la station de la figure 3d, qui n'entraîne pas de modification d'un autre élément de l'instruction de programmation modifiée, selon un ou plusieurs modes de réalisation :
- l'utilisateur saisit dans ses mains la station 1 avec les huit cubes positionnés sur le support 2, et retire du support 2 le cube 3b qui correspond à un élément à modifier dans la programmation affichée sur les faces CS0, CT0, AA0, ASO des cubes formant un côté de la station 1 (figure 3e). Ce détachement du cube 3b est détecté par le cube 3b lui-même, et celui-ci affiche sur ses faces (CT2 notamment), les éléments d'instructions de programmation supplémentaires qu'il a en mémoire (niveau d'éclairage à 25% sur la face supérieure, niveau d'éclairage à 100% sur la face CT2) ;
- l'utilisateur tourne ensuite le cube 3b qu'il a retiré pour déterminer celle des faces de ce cube qui affiche l'élément d'instruction de programmation qu'il désire adopter. Cette manipulation du cube 3b est illustrée par la figure 3f ;
- l'utilisateur repositionne le cube 3b sur le support 2 en exposant la face qui affiche l'élément d'instruction de programmation adopté sur le côté de la station 1 identifié comme étant le côté concerné par la modification (figure 3g). Dans l'exemple illustré, l'utilisateur choisit de modifier l'élément d'instruction de programmation correspondant à un niveau d'éclairage de 75% en le remplaçant par un élément d'instruction de programmation correspondant à un niveau d'éclairage de 50% ; et
- sur repositionnement du cube 3b sur le support 2, des données relatives à l'élément d'instruction de programmation correspondant à la face ASO sont transmises à la plateforme de gestion 101 de la figure 1. La plateforme de gestion détecte une modification de l'élément d'instruction de programmation correspondant à la face ASO de la station, puis analyse la combinaison d'éléments d'instruction de programmation correspondant au côté de la station de programmation 1 qui est concerné par la modification (thème de la luminosité (sur la face CS0), condition de baisse de la luminosité (sur la face CT0), appareil d'éclairage à actionner (sur la face AA0) et action d'activation d'un éclairage avec un niveau donné (sur la face ASO)). La plateforme de gestion ne détecte pas d'incompatibilité, d'absence ou de défaut de correspondance entre deux éléments d'instruction de programmation dans cette combinaison, et notamment entre l'appareil à actionner et l'action à effectuer sur cet appareil, ou, selon les modes de réalisation, entre le type d'appareil à actionner et le type d'action à réaliser. Dans ce cas (non-détection d'une incompatibilité, d'une absence ou d'un défaut de correspondance, selon les modes de réalisation), la plateforme de gestion peut être configurée pour ne pas déterminer de modification d'instruction de programmation, et par conséquent ne pas transmettre à la station de programmation 1 de données relatives à une instruction de programmation à modifier. La station de programmation affiche donc sur la face AS0, suite au repositionnement du cube 3b sur le support 2, l'élément d'instruction de programmation (50%) tel que modifié par l'utilisateur.

Dans un ou plusieurs modes de réalisation, pour faciliter encore plus l'utilisation de la station 1, certains des cubes 3 peuvent être affectés à la sélection d'éléments d'instructions de programmation qui spécifient toujours des conditions d'activation, telles qu'introduites plus haut et comprenant les variables de conditions et les conditions. Simultanément, d'autres des cubes 3 peuvent être affectés à la sélection d'éléments d'instructions de programmation qui spécifient toujours des fonctionnements d'appareils. Les cubes de ces deux catégories peuvent alors être différenciés, par exemple par des couleurs, des formes, des dimensions, ou des matières différentes. Dans le cas de figure non limitatif dans lequel deux couleurs sont utilisées pour différencier les catégories de cubes, ces couleurs indiquent avantageusement à l'utilisateur qui a retiré l'un des cubes 3 du support 2 qu'il est en train de sélectionner une condition d'activation ou un fonctionnement d'appareil. Ainsi, dans les figures 2 et 3, les deux cubes 3 qui apparaissent sur le devant de la station 1 dans sa partie gauche peuvent par exemple d'être d'une première couleur, et les deux autres cubes 3 qui apparaissent aussi sur le devant de la station 1 mais dans sa partie droite peuvent par exemple d'être d'une seconde couleur, différente de la première couleur.

Dans un ou plusieurs modes de réalisation, chaque face d'un cube peut être affectée à la sélection d'un élément d'instruction de programmation qui est soit toujours du type condition d'activation, soit toujours du type fonctionnement d'appareil, le type d'élément d'instruction pouvant varier entre des faces différentes d'un même cube. Dans ce cas, les faces peuvent être de couleurs différentes, qu'elles appartiennent ou non à un même cube.

Dans d'autres modes de réalisation qui sont encore possibles, les cubes ou les faces de cubes peuvent être affecté(e)s chacun(e) à un seul des quatre types d'éléments d'instructions de programmation énumérés plus haut. Une telle affectation peut alors être indiquée à l'utilisateur par toute(s) caractéristique(s) de différenciation, comme par exemple quatre couleurs différentes pour les cubes ou les faces de cubes.

De telles mises en œuvre avec des caractéristiques de différenciation, telles que des couleurs différenciées, augmentent encore le caractère intuitif de l'utilisation de la station 1.

Dans un ou plusieurs modes de réalisation, le support 2 de la station 1 peut être pourvu de sélecteurs, par exemple à base de capteurs tactiles, et de témoins visuels pour permettre à l'utilisateur de modifier des paramètres de fonctionnement de la station 1, ou de visualiser un état de fonctionnement ou de paramétrage de celle-ci. Les paramètres ainsi ajustables peuvent concerner, à titre d'exemples non-limitatifs, l'activation d'un haut-parleur de la station 1, un réglage de son volume, l'activation d'un microphone de la station 1, la sélection d'une langue, la sélection et/ou la configuration d'un mode de connexion de la station 1 au réseau de communication 100, par exemple pour paramétrer un mode de connexion de type WiFi^{®}, etc. Les témoins visuels peuvent concerner ces ajustements de paramètres, indiquer un niveau de charge résiduel de la batterie de la station 1, une qualité de transmission entre la station 1 et le réseau de communication 100, etc. De tels sélecteurs et témoins visuels sont indiqués globalement par la référence 2f sur l'exemple illustré par la figure 2a.

Dans un ou plusieurs modes de réalisation, l'ajustement de paramètres de la station 1 peut être effectué par l'intermédiaire des cubes 3, d'une façon similaire au mode de programmation qui a été décrit pour les appareils externes à la station 1. Par exemple, l'un des appareils qui est affiché sur une face d'un des cubes 3, peut être remplacé par un pictogramme de la station 1 elle-même, et les options de fonctionnement ou de paramétrage de la station 1 qui peuvent être modifiées par l'utilisateur peuvent être affichées sur des faces d'un autre cube 3.

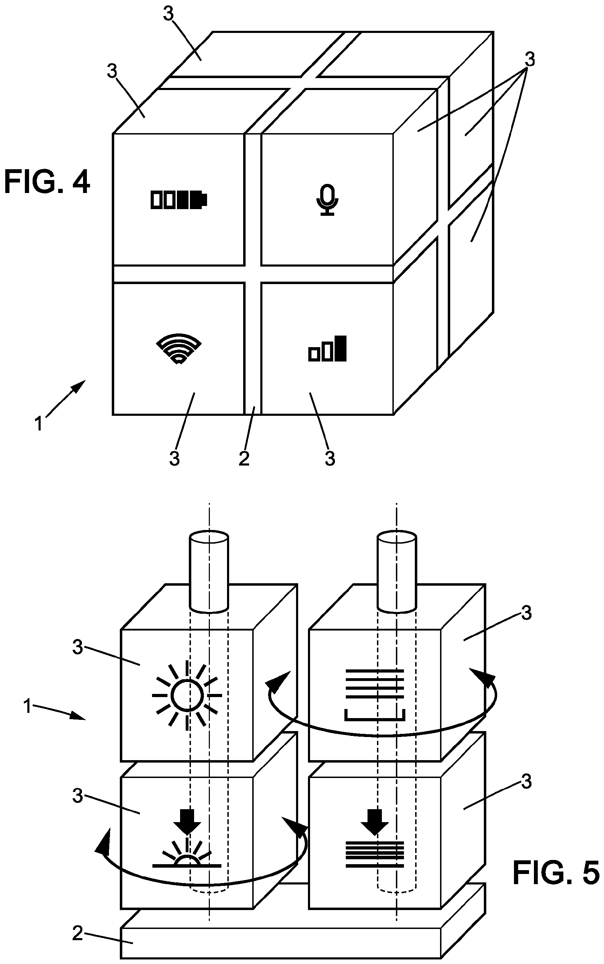

Dans des modes de réalisation aussi possibles, des témoins visuels qui sont relatifs au fonctionnement et au paramétrage de la station 1 peuvent être remplacés par des affichages sur certaines des faces de cubes 3, à la place des éléments d'instructions de programmation qui concernent les appareils externes à la station 1. La figure 4 montre un exemple d'un tel mode de réalisation, dans lequel les faces de cubes 3 qui sont exposées frontalement indiquent le niveau de charge résiduel de la batterie 2d, un fonctionnement de réception en vigueur par connexion sans fil, un état d'activation en vigueur pour le microphone de la station 1, et un niveau de volume en vigueur pour son haut-parleur. Possiblement, certains cubes 3 ou certaines faces de cubes 3 peuvent être dédié(e)s au fonctionnement et au paramétrage de la station 1. Dans ce cas, ils (elles) peuvent être différencié(e)s par une caractéristique de différenciation, tel qu'une couleur, une taille, une forme, et/ou une matière particulières, par rapport aux autres cubes 3 ou faces de cubes 3 qui sont dédié(e)s à la programmation d'appareils externes à la station 1.

Bien que la station de programmation proposée ait été décrite ci-dessus pour une configuration géométrique à huit cubes 3 qui sont maintenus sur le support 2 selon l'agencement tridimensionnel 2 cubes x 2 cubes x 2 cubes, l'Homme du métier comprendra que de multiples autres configurations géométriques sont possibles pour la station 1. De telles autres configurations peuvent faciliter des manipulations de la station 1 par l'utilisateur, ou favoriser encore plus des utilisations intuitives.

La figure 5 montre une autre configuration possible, dans laquelle les cubes 3 sont superposés en colonnes et orientables autour d'un axe vertical de chaque colonne, le support 2 comprenant alors une base ayant une face supérieure formant une surface, par exemple sensiblement plane, sur laquelle sont montés un ou plusieurs axes non coplanaires avec la face supérieure, par exemple perpendiculaires à cette face comme illustré sur la figure 5. Alternativement, dans encore une autre configuration possible, les cubes 3 peuvent être juxtaposés horizontalement sur des lignes superposées, et orientables autour d'un axe horizontal de chaque ligne, à la façon d'un boulier.

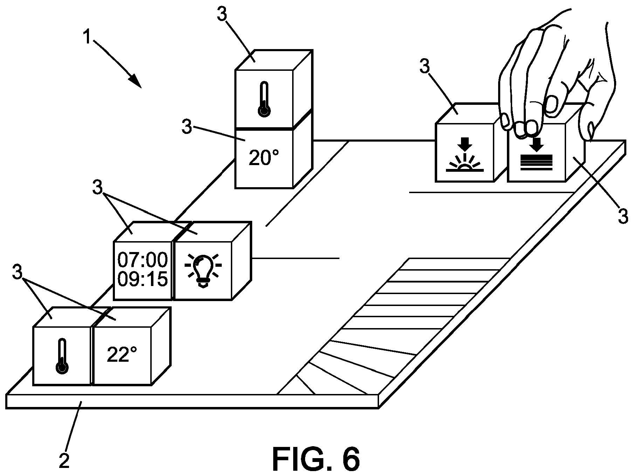

La figure 6 montre une autre configuration possible, dans laquelle le support 2, ayant dans l'exemple non limitatif illustré sur la figure une face formant une surface sensiblement plane, constitue une représentation de la répartition spatiale de plusieurs appareils à l'intérieur d'une zone géographique ZG. Les blocs 3 (ayant dans cet exemple une forme cubique) qui sont utilisés pour la programmation de l'un des appareils, configurés selon l'un des modes de réalisation décrits ci-dessus, peuvent être situés sur le support 2 à des emplacements qui correspondent à la localisation de cet appareil dans la zone géographique ZG. De cette façon, l'utilisateur peut se représenter plus facilement le ou les appareil(s) dont il est en train de programmer le fonctionnement.

Plus spécifiquement, l'exemple de réalisation qui est illustré par la figure 6 montre deux cubes 3 placés l'un à côté de l'autre, avec deux faces coplanaires dont l'une affiche un pictogramme désignant le thème de la température, et l'autre affiche une consigne de température (22°C). Ces deux cubes permettent de définir une consigne de température dans la pièce correspondant sur le plan de la zone géographique à l'emplacement de ces deux cubes sur le support 2.

Deux autres cubes 3 sont placés l'un à côté de l'autre à un autre endroit du support 2, avec deux faces coplanaires dont l'une affiche un pictogramme désignant le thème de la lumière, et l'autre affiche une consigne de type intervalle de temps (de 7h00 à 9h15). Ces deux cubes permettent de définir une programmation d'allumage de la lumière dans la pièce qui correspond sur le plan de la zone géographique à l'emplacement de ces deux cubes sur le support 2, pour l'intervalle de temps programmé, c'est-à-dire de 7h00 à 9h15 dans l'exemple illustré.

Deux autres cubes 3 sont placés l'un sur l'autre à encore un autre endroit du support 2, avec deux faces coplanaires dont l'une affiche un pictogramme désignant le thème de la température, et l'autre affiche une consigne de température (20°C). Comme dans l'exemple ci-dessus, mais avec deux cubes placés l'un sur l'autre au lieu d'être placés l'un à côté de l'autre, et pour un appareil qui est situé à un autre endroit de la zone géographique dont le support 2 représente un plan, les deux cubes permettent de définir une consigne de température dans un emplacement de la zone géographique qui correspond à l'emplacement de ces deux cubes sur le support 2.

Enfin, deux autres cubes 3 sont placés l'un à côté de l'autre à encore un autre endroit du support 2, avec deux faces coplanaires dont l'une affiche un pictogramme désignant une condition de luminosité, et l'autre affiche une action portant sur un appareil de type store ou volet. Ces deux cubes permettent de définir une programmation de fermeture des stores ou des volets lorsque la luminosité baisse dans la pièce qui correspond sur le plan de la zone géographique à l'emplacement de ces deux cubes sur le support 2.

Ces quatre exemples montrent des ensembles de deux cubes disposés sur le support de manière à avoir deux faces coplanaires, chacune des deux faces coplanaires étant munie d'un afficheur pour afficher un élément d'instruction de programmation d'un appareil qui est situé sur le plan de la zone géographique à un emplacement (par exemple considéré à l'échelle d'une pièce) correspondant à l'emplacement des deux cubes sur le support, et la combinaison des éléments d'instruction de programmation affichés sur les faces coplanaires formant une instruction de programmation du fonctionnement de l'appareil.

L'Homme du métier comprendra en outre que les systèmes, stations de programmation, plateforme(s) et procédés proposés peuvent être mis en œuvre dans différents modes de réalisation en modifiant certains aspects par rapport aux modes de réalisation qui ont été décrits en détail ci-dessus. En particulier, les aspects suivants peuvent être modifiés :
- la forme des blocs orientables peut être différente de celle de cubes ;
- l'agencement et le mode de maintien des blocs sur le support peuvent être quelconques ;
- les modes de communication entre la station de programmation à blocs orientables et la plateforme de gestion de celle-ci peuvent être quelconques ;
- la répartition des fonctions entre la station de programmation à blocs orientables et la plateforme de gestion de celle-ci, notamment en ce qui concerne les fonctions de mémorisation, de configuration des faces des blocs, de sélection contextuelle des instructions de programmation ou éléments d'instructions de programmation, etc., peut être modifiée ; et
- la répartition des fonctions entre le support de la station de programmation à blocs orientables et les blocs, notamment en ce qui concerne les fonctions de mémorisation, de détection de mouvement, de détection du repositionnement d'un bloc sur le support, de détection de l'orientation de chaque bloc, de configuration des faces d'un bloc, etc., peut aussi être modifiée.

Les systèmes, stations de programmation, plateforme(s), équipements utilisateur et procédés proposés peuvent être mis en œuvre au moyen de composants logiciels et/ou matériels. Dans cette optique, les termes «module» et «unité» peuvent correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit pour le module ou l'unité concerné.

Un composant logiciel correspond à un ou plusieurs programme(s) d'ordinateur exécutable(s) par un processeur, un ou plusieurs sous-programme(s) d'un programme, ou de manière plus générale à tout élément d'un programme ou d'un logiciel. Un tel composant logiciel est stocké en mémoire puis chargé et exécuté par un processeur de données d'une entité physique (passerelle multimédia, équipement utilisateur, terminal, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré (comme un circuit intégré pour application spécifique (ASIC, de l'anglais «Application-Specific Integrated Circuit»), un système sur puce (SOC, de l'anglais «System On Chip»), une carte à puce, une carte électronique pour l'exécution d'un micrologiciel («firmware»), etc.

Les SOC sont des systèmes embarqués qui intègrent tous les composants d'un système électronique dans une puce unique. Un ASIC est un circuit électronique spécialisé qui regroupe des fonctionnalités sur mesure pour une application donnée. Les ASIC sont généralement configurés lors de leur fabrication et ne peuvent être que simulés par l'utilisateur.

Un procédé tel que proposé peut également utiliser des architectures hybrides, comme par exemple des architectures basées sur un CPU+FPGA, un GPU (de l'anglais «Graphics Processing Unit») ou un MPPA (de l'anglais «Multi-Purpose Processor Array»).

Les systèmes, stations de programmation, plateforme(s), équipements utilisateur et procédés proposés peuvent en outre être mis en œuvre en utilisant une ou plusieurs combinaison(s) d'éléments logiciels et matériels, comme par exemple un programme logiciel destiné à être chargé et exécuté sur un composant de type circuit logique programmable (FPGA, de l'anglais «Field Programmable Gate Array»). Les FPGA sont des circuits électroniques reconfigurables par l'utilisateur.

En fonction du mode de réalisation choisi, certains actes, actions, événements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, les systèmes, stations de programmation, plateforme(s), équipements utilisateur et procédés proposés comprennent différentes variantes, modifications et perfectionnements qui apparaîtront de façon évidente à l'Homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Station de programmation universelle (1) à blocs orientables, destinée à programmer des fonctionnements d'au moins un appareil (10-12),
dans laquelle des orientations respectives de plusieurs blocs (3) sur un support (2) de la station (1) correspondent, par configuration desdits plusieurs blocs et du support, à au moins une instruction de programmation d'un fonctionnement de l'appareil (10-12),
et dans laquelle la station (1) est pourvue d'un module de détection (2b) configuré pour détecter les orientations respectives des blocs (3) portés par le support (2), et d'un module de communication (2c) configuré pour envoyer à une plateforme de gestion (101), par l'intermédiaire d'un réseau de communication (100), des données qui représentent l'au moins une instruction de programmation correspondant aux blocs et à leurs orientations respectives sur le support.

2. Station de programmation universelle (1) selon la revendication 1, la station (1) étant en outre configurée pour, suite à un repositionnement sur le support (2) d'au moins un bloc (3) dont l'orientation a été modifiée par un utilisateur, identifier l'orientation modifiée de l'au moins un bloc, telle que résultant du repositionnement, et envoyer à la plateforme de gestion (101) de nouvelles données qui représentent au moins une nouvelle instruction de programmation résultant de ladite orientation modifiée de l'au moins un bloc.

3. Station de programmation universelle (1) selon la revendication 1 ou 2, dans laquelle au moins un des blocs (3) est détachable et repositionnable sur le support (2) selon plusieurs orientations distinctes, pour exposer des faces respectives de plusieurs des blocs en juxtaposition sur le support, afin de composer une combinaison des faces exposées desdits plusieurs blocs qui correspond à l'instruction de programmation.

4. Station de programmation universelle (1) selon la revendication 3, dans laquelle au moins un des blocs (3) possède plusieurs faces qui sont munies d'afficheurs respectifs.

5. Station de programmation universelle (1) selon la revendication 4, dans laquelle le module de communication (2c) est configuré pour recevoir, en provenance de la plateforme de gestion (101) par l'intermédiaire du réseau de communication (100), des instructions de programmation qui sont disponibles ou des éléments d'instructions de programmation qui sont disponibles à afficher sur les faces munies d'afficheurs.

6. Station de programmation universelle (1) selon la revendication 4 ou 5, dans laquelle le module de communication (2c) est configuré pour recevoir, en provenance de la plateforme de gestion (101) par l'intermédiaire du réseau de communication (100), des éléments d'instructions de programmation qui sont disponibles à afficher sur les faces munies d'afficheurs, certains au moins desdits éléments d'instructions de programmation spécifiant chacun une partie au moins d'une condition d'activation, ou spécifiant chacun au moins en partie un fonctionnement d'un appareil, et dans laquelle des instructions de programmation qui sont accessibles par l'utilisateur au moyen de la station (1) sont constituées chacune par une condition d'activation qui est combinée avec un fonctionnement d'un appareil.

7. Station de programmation universelle (1) selon la revendication 6, dans laquelle certains des éléments d'instructions de programmation qui spécifient une partie d'une condition d'activation, spécifient chacun une variable de condition ou une condition destinée à porter sur une variable de condition,
et certains des éléments d'instructions de programmation qui spécifient en partie un fonctionnement d'appareil, spécifient chacun un appareil à activer ou un fonctionnement d'appareil à activer si la condition d'activation est réalisée.

8. Station de programmation universelle (1) selon l'une quelconque des revendications 1 à 7, dans laquelle le support (2) est conçu pour correspondre à une répartition spatiale d'au moins un appareil (10-12) dans une zone géographique (ZG), et est configuré pour maintenir chaque bloc (3) qui concerne la programmation dudit appareil à un emplacement sur le support qui correspond à un emplacement de l'appareil dans la zone géographique.

9. Procédé de programmation de fonctionnements d'au moins un appareil (10-12), le procédé comprenant:
/1/ fournir une station de programmation universelle (1) qui est conforme à l'une quelconque des revendications précédentes, et relier la station à une plateforme de gestion (101) de ladite station par un réseau de communication (100) ;
/2/ par la plateforme de gestion (101) : configurer les blocs (3) et le support (2) en affectant des instructions de programmation ou des éléments d'instructions de programmation aux orientations des blocs sur le support ;
/3/ par la station (1) : détecter des orientations actuelles des blocs (3) portés par le support (2), puis envoyer à la plateforme de gestion (101) par le réseau de communication (100), des données qui identifient lesdites orientations actuelles des blocs ;
/4/ par un utilisateur : modifier une orientation d'au moins un des blocs (3) portés par le support (2), pour constituer une nouvelle orientation actuelle de l'au moins un bloc ;
/5/ par la station (1) : répéter l'étape /3/ pour la nouvelle orientation actuelle de l'au moins un bloc dont l'orientation a été modifiée ;
/6/ par la plateforme de gestion (101) : déterminer au moins une instruction de programmation qui correspond aux orientations actuelles des blocs (3) sur le support (2), telles qu'identifiées par les données reçues, puis en collaboration avec une autre plateforme (110-112) relative à l'appareil (10-12), commander un fonctionnement dudit appareil qui est conforme à l'instruction de programmation déterminée.

10. Procédé selon la revendication 9, suivant lequel la station (1) est conforme à la revendication 4, et le procédé comprend en outre:
- par la plateforme de gestion (101) : transmettre à la station (1), par le réseau de communication (100), les instructions de programmation ou éléments d'instructions de programmation affecté(e)s à celles des faces munies d'afficheurs qui sont exposées sur le support (2) ;
- par la station (1) : pour les blocs (3) portés par le support (2), afficher sur les faces exposées et munies d'afficheurs desdits blocs, les instructions de programmation ou éléments d'instructions de programmation affecté(e)s auxdites faces exposées et munies d'afficheurs.

11. Procédé selon la revendication 10, comprenant en outre, lorsqu'un des blocs (3) est retiré du support (2) :
- par la station (1) : afficher sur plusieurs des faces munies d'afficheurs du bloc (3) retiré, des instructions de programmation ou éléments d'instructions de programmation disponibles pour être sélectionné(e)s alternativement par l'utilisateur en modifiant l'orientation du bloc pour repositionner ledit bloc sur le support (2).

## Patentansprüche

1. Universelle Programmierstation (1) mit ausrichtbaren Blöcken, die dazu bestimmt ist, Funktionen mindestens eines Geräts (10-12) zu programmieren,
wobei jeweilige Ausrichtungen mehrerer Blöcke (3) auf einem Träger (2) der Station (1) durch Konfiguration der mehreren Blöcke und des Trägers mindestens einer Anweisung zur Programmierung einer Funktion des Geräts (10-12) entsprechen,
und wobei die Station (1) mit einem Erfassungsmodul (2b), das konfiguriert ist, die jeweiligen Ausrichtungen der vom Träger (2) getragenen Blöcke (3) zu erfassen, und mit einem Kommunikationsmodul (2c) versehen ist, das konfiguriert ist, an eine Verwaltungsplattform (101) mittels eines Kommunikationsnetzes (100) Daten zu senden, die die mindestens eine Programmieranweisung darstellen, die den Blöcken und ihren jeweiligen Ausrichtungen auf dem Träger entspricht.

2. Universelle Programmierstation (1) nach Anspruch 1, wobei die Station (1) außerdem konfiguriert ist, nach einer Umpositionierung auf dem Träger (2) mindestens eines Blocks (3), dessen Ausrichtung von einem Benutzer verändert wurde, die veränderte Ausrichtung des mindestens einen Blocks, wie sie aus der Umpositionierung resultiert, zu identifizieren, und an die Verwaltungsplattform (101) neue Daten zu senden, die mindestens eine neue Programmieranweisung darstellen, die aus der veränderten Ausrichtung des mindestens einen Blocks resultiert.

3. Universelle Programmierstation (1) nach Anspruch 1 oder 2, wobei mindestens einer der Blöcke (3) lösbar und auf dem Träger (2) gemäß mehreren unterschiedlichen Ausrichtungen umpositionierbar ist, um jeweilige Seiten mehrerer der Blöcke in Nebeneinanderanordnung auf dem Träger zu exponieren, um eine Kombination der exponierten Seiten der verschiedenen Blöcke zusammenzustellen, die der Programmieranweisung entspricht.

4. Universelle Programmierstation (1) nach Anspruch 3, wobei mindestens einer der Blöcke (3) mehrere Seiten besitzt, die mit jeweiligen Anzeigeeinrichtungen versehen sind.

5. Universelle Programmierstation (1) nach Anspruch 4, wobei das Kommunikationsmodul (2c) konfiguriert ist, von der Verwaltungsplattform (101) über das Kommunikationsnetz (100) kommend Programmieranweisungen, die verfügbar sind, oder Elemente von Programmieranweisungen, die verfügbar sind, zu empfangen, die auf den mit Anzeigeeinrichtungen versehenen Seiten anzuzeigen sind.

6. Universelle Programmierstation (1) nach Anspruch 4 oder 5, wobei das Kommunikationsmodul (2c) konfiguriert ist, von der Verwaltungsplattform (101) kommend über das Kommunikationsnetz (100) Elemente von Programmieranweisungen zu empfangen, die zur Anzeige auf den mit Anzeigeeinrichtungen versehenen Seiten verfügbar sind, wobei mindestens bestimmte der Programmieranweisungselemente je mindestens einen Teil einer Aktivierungsbedingung spezifizieren, oder je mindestens zum Teil eine Funktion eines Geräts spezifizieren,
und wobei Programmieranweisungen, die für den Benutzer mittels der Station (1) zugänglich sind, je aus einer Aktivierungsbedingung bestehen, die mit einer Funktion eines Geräts kombiniert ist.

7. Universelle Programmierstation (1) nach Anspruch 6, wobei bestimmte der Elemente von Programmieranweisungen, die einen Teil einer Aktivierungsbedingung spezifizieren, je eine Bedingungsvariable oder eine Bedingung spezifizieren, die dazu bestimmt ist, eine Bedingungsvariable zu betreffen,
und bestimmte der Elemente von Programmieranweisungen, die zum Teil eine Funktion eines Geräts spezifizieren, je ein zu aktivierendes Gerät oder einen Funktion eines zu aktivierenden Geräts spezifizieren, wenn die Aktivierungsbedingung realisiert wird.

8. Universelle Programmierstation (1) nach einem der Ansprüche 1 bis 7, wobei der Träger (2) konzipiert ist, einer räumlichen Verteilung mindestens eines Geräts (10-12) in einer geografischen Zone (ZG) zu entsprechen, und konfiguriert ist, jeden Block (3), der die Programmierung des Geräts betrifft, an einer Stelle auf dem Träger zu halten, die einer Stelle des Geräts in der geografischen Zone entspricht.

9. Verfahren zur Programmierung von Funktionen mindestens eines Geräts (10-12), wobei das Verfahren enthält:
/1/ Bereitstellen einer universellen Programmierstation (1), die einem der vorhergehenden Ansprüche entspricht, und Verbinden der Station mit einer Verwaltungsplattform (101) der Station über ein Kommunikationsnetz (100);
/2/ durch die Verwaltungsplattform (101): Konfigurieren der Blöcke (3) und des Trägers (2), indem Programmieranweisungen oder Elemente von Programmieranweisungen den Ausrichtungen der Blöcke auf dem Träger zugeteilt werden;
/3/ durch die Station (1): Erfassen von aktuellen Ausrichtungen der vom Träger (2) getragenen Blöcke (3), dann Senden an die Verwaltungsplattform (101) über das Kommunikationsnetz (100) von Daten, die die aktuellen Ausrichtungen der Blöcke identifizieren;
/4/ durch einen Benutzer: Verändern einer Ausrichtung mindestens eines der vom Träger (2) getragenen Blöcke (3), um eine neue aktuelle Ausrichtung des mindestens einen Blocks zu bilden;
/5/ durch die Station (1): Wiederholen des Schritts /3/ für die neue aktuelle Ausrichtung des mindestens einen Blocks, dessen Ausrichtung verändert wurde;
/6/ durch die Verwaltungsplattform (101): Bestimmen mindestens einer Programmieranweisung, die den aktuellen Ausrichtungen der Blöcke (3) auf dem Träger (2) entspricht, wie sie von den empfangenen Daten identifiziert werden, dann in Zusammenwirkung mit einer anderen Plattform (110-112) bezüglich des Geräts (10-12), Steuern einer Funktion des Geräts, die der bestimmten Programmieranweisung entspricht.

10. Verfahren nach Anspruch 9, gemäß dem die Station (1) Anspruch 4 entspricht, und das Verfahren außerdem enthält:
- durch die Verwaltungsplattform (101): Übertragen an die Station (1) über das Kommunikationsnetz (100) der Programmieranweisungen oder der Elemente von Programmieranweisungen, die denjenigen der mit Anzeigeeinrichtungen versehenen Seiten zugewiesen sind, die auf dem Träger (2) exponiert sind;
- durch die Station (1): für die vom Träger (2) getragenen Blöcke (3), Anzeige, auf den exponierten und mit Anzeigeeinrichtungen versehenen Seiten der Blöcke, der Programmieranweisungen oder Elemente von Programmieranweisungen, die den exponierten und mit Anzeigeeinrichtungen versehenen Seiten zugewiesen sind.

11. Verfahren nach Anspruch 10, das außerdem enthält, wenn einer der Blöcke (3) vom Träger (2) entfernt wird:
- durch die Station (1): Anzeige, auf mehreren der mit Anzeigeeinrichtungen versehenen Seiten des entfernten Blocks (3), von verfügbaren Programmieranweisungen oder Elementen von Programmieranweisungen, um alternativ vom Benutzer ausgewählt zu werden, indem er die Ausrichtung des Blocks ändert, um den Block auf dem Träger (2) umzupositionieren.

## Claims

1. Universal programming station (1) with orientable blocks, which is intended for programming operations of at least one appliance (10-12),
wherein respective orientations of a plurality of blocks (3) on a support (2) of the station (1) correspond, by configuration of said plurality of blocks and of the support, to at least one instruction for programming an operation of the appliance (10-12),
and wherein the station (1) is provided with a detection module (2b), which is configured to detect the respective orientations of the blocks (3) borne by the support (2), and with a communication module (2c), which is configured to send data representing the at least one programming instruction corresponding to the blocks and to the respective orientations thereof on the support to a management platform (101) via a communication network (100) .

2. Universal programming station (1) according to Claim 1, the station (1) being further configured so as, after at least one block (3) whose orientation has been changed by a user has been repositioned on the support (2), to identify the changed orientation of the at least one block, which is the result of the repositioning, and to send new data representing at least one new programming instruction resulting from said changed orientation of the at least one block to the management platform (101).

3. Universal programming station (1) according to Claim 1 or 2, wherein at least one of the blocks (3) can be detached and repositioned on the support (2) in a plurality of distinct orientations, so as to expose respective faces of a plurality of the blocks in juxtaposition on the support, in order to create a combination of the exposed faces of said plurality of blocks that corresponds to the programming instruction.

4. Universal programming station (1) according to Claim 3, wherein at least one of the blocks (3) has a plurality of faces which are provided with respective displays.

5. Universal programming station (1) according to Claim 4, wherein the communication module (2c) is configured to receive, from the management platform (101) via the communication network (100), programming instructions that are available or programming instruction elements that are available to be displayed on the faces provided with displays.

6. Universal programming station (1) according to Claim 4 or 5, wherein the communication module (2c) is configured to receive, from the management platform (101) via the communication network (100), programming instruction elements that are available to be displayed on the faces provided with displays, at least some of said programming instruction elements each specifying at least part of an activation condition, or each at least partly specifying an operation of an appliance,
and wherein programming instructions that are accessible to the user by means of the station (1) each consist of an activation condition which is combined with an operation of an appliance.

7. Universal programming station (1) according to Claim 6, wherein some of the programming instruction elements that specify part of an activation condition each specify a condition variable or a condition which is intended to relate to a condition variable,
and some of the programming instruction elements that partly specify an appliance operation each specify an appliance to be activated or an appliance operation to be activated if the activation condition is met.

8. Universal programming station (1) according to any one of Claims 1 to 7, wherein the support (2) is designed to correspond to a spatial distribution of at least one appliance (10-12) in a geographic area (ZG), and is configured to hold each block (3) which relates to the programming of said appliance at a location on the support that corresponds to a location of the appliance in the geographic area.

9. Method for programming operations of at least one appliance (10-12), the method comprising:
/1/ providing a universal programming station (1) that is in accordance with any one of the preceding claims, and connecting the station to a management platform (101) for said station via a communication network (100);
/2/ by the management platform (101): configuring the blocks (3) and the support (2) by assigning programming instructions or programming instruction elements to the orientations of the blocks on the support;
/3/ by the station (1): detecting current orientations of the blocks (3) borne by the support (2), then sending data identifying said current orientations of the blocks to the management platform (101) via the communication network (100);
/4/ by a user: changing an orientation of at least one of the blocks (3) borne by the support (2), so as to form a new current orientation of the at least one block;
/5/ by the station (1): repeating step /3/ for the new current orientation of the at least one block whose orientation has been changed;
/6/ by the management platform (101): determining at least one programming instruction corresponding to the current orientations of the blocks (3) on the support (2), as identified by the received data, then, in conjunction with another platform (110-112) relating to the appliance (10-12), commanding an operation of said appliance that is in accordance with the determined programming instruction.

10. Method according to Claim 9, according to which the station (1) is in accordance with Claim 4, and the method further comprises:
- by the management platform (101): transmitting to the station (1), via the communication network (100), the programming instructions or programming instruction elements assigned to those of the faces provided with displays that are exposed on the support (2);
- by the station (1): for the blocks (3) borne by the support (2), displaying, on the faces of said blocks that are exposed and provided with displays, the programming instructions or programming instruction elements assigned to said faces that are exposed and provided with displays.

11. Method according to Claim 10, further comprising, when one of the blocks (3) is removed from the support (2) :
- by the station (1): displaying, on a plurality of the faces of the removed block (3) that are provided with displays, programming instructions or programming instruction elements available to be selected alternatively by the user by changing the orientation of the block so as to reposition said block on the support (2).
